# EUROPÄISCHE PATENTANMELDUNG

(11) **EP 4 282 597 A1**
(43) Veröffentlichungstag der Anmeldung: **29.11.2023**
(21) Anmeldenummer: 23174358.4
(22) Anmeldetag: 19.05.2023
(51) Int. Cl.: B25J 5/00, B25J 11/00, B25J 9/04, B25J 18/04, B25J 17/02, B25J 9/08, B25J 19/02, B25J 13/08, B25J 9/16

(54) **MOBILE ROBOTERVORRICHTUNGEN UND VERFAHREN ZUR BAHNFÖRMIGEN OBERFLÄCHENBEARBEITUNG VON GEBÄUDESTRUKTUREN**

(30) Priorität: 24.05.2022 DE 102022113096
(71) Anmelder: ConBotics GmbH, 10625 Berlin (DE)
(72) Erfinder: Heyne, Philipp Jonathan, 12055 Berlin (DE)
(74) Vertreter: Gerstein, Hans Joachim

(57) **Zusammenfassung**

Die vorliegende Erfindung offenbart eine mobile Robotervorrichtung (1) zur bahnförmigen Oberflächenbearbeitung von Gebäudestrukturen (2a, 2b), mit
• einer fahrbaren Plattform (3);
• einer Steuereinrichtung (4);
• einer Robotereinheit (5), die eine Hubeinheit (6) mit einer vertikalen Hubachse (d₁) sowie einen an der Hubeinheit (6) angeordneten Roboterarm (7) mit zumindest einer Roboterachse aufweist; und
• einem an dem Roboterarm (7) angeordneten Bearbeitungswerkzeug (8) zum Bearbeiten einer Oberfläche einer monotonen Gebäudestruktur (2a, 2b);
wobei der Roboterarm (7) eine translatorische Roboterachse aufweist, die als linear verfahrbare Auslegerachse (d₃) ausgebildet ist, und die Auslegerachse (d₃) mit einer ersten rotatorischen Roboterachse (q₂) schwenkbar an der Hubeinheit (6) angeordnet ist. Das Bearbeitungswerkzeug (8) ragt quer von der linear verfahrbaren Auslegerachse (d₃) ab und ist eingerichtet, eine parallel zur Auslegerachse (d₃) ausgerichtete Oberfläche zu bearbeiten. Die linear verfahrbare Auslegerachse (d₃) des Roboterarms (7) ist mit einem Linearaktuator gekoppelt und durch den Linearaktuator linear verfahrbar angetrieben, wobei die linear verfahrbare Auslegerachse (d₃) beidseits aus dem Linearaktuator herausragt.

## Beschreibung

Die Erfindung betrifft mobile Robotervorrichtungen zur bahnförmigen Oberflächenbearbeitung von Gebäudestrukturen, mit einer fahrbaren Plattform, einer Steuereinrichtung, einer Robotereinheit mit einem Roboterarm, der zumindest eine Roboterachse aufweist, sowie einem an dem Roboterarm angeordneten Bearbeitungswerkzeug zum Bearbeiten einer Oberfläche einer Gebäudestruktur. Der Roboterarm weist eine translatorische Roboterachse auf, die als linear verfahrbare Auslegerachse ausgebildet ist. Die Auslegerachse ist mit einer ersten rotatorischen Roboterachse schwenkbar an der Hubeinheit angeordnet.

Die Erfindung betrifft ferner ein Verfahren zur bahnförmigen Oberflächenbearbeitung von vertikalen Gebäudestrukturen sowie ein Verfahren zur Oberflächenbearbeitung von horizontalen Gebäudestrukturen mit einer solchen Robotervorrichtung.

Im Zuge des zunehmenden Einsatzes von Maschinen und Robotern für wiederkehrende mechanische Arbeiten wurden bereits technische Lösungen für das Bauwesen entwickelt, um auch in diesem Tätigkeitsbereich den Anteil menschlicher körperlicher Arbeit reduzieren zu können. Im Unterschied zu Produktions- und Industrieanwendungen, bei denen häufig stationäre Maschinen- und Roboterlösungen zum Tragen kommen, ist es für Arbeiten an Gebäuden und auf Baustellen primär erforderlich, mobile Technologien zur Anwendung bringen zu können. Der Einzug programmgesteuerter Robotervorrichtungen und -anlagen ist auf diesem Fachgebiet jedoch bisher nur vereinzelt zu beobachten, da erhältliche Robotersysteme überwiegend komplex aufgebaut sind, ein hohes Gewicht und damit einhergehend eine geringe Mobilität aufweisen, mit hohen Investitionskosten verbunden sind und die Programmierung und Bedienung durchaus anspruchsvoll sein kann.

Aufgrund des hohen Anteils an erforderlicher mechanischer Arbeit im Bauwesen sowie des zunehmenden Mangels an Fachpersonal ist der Grundgedanke des Robotereinsatzes jedoch attraktiv und wirtschaftlich vielversprechend. Die Erfindung beruht daher auf Überlegungen, deutlich einfacher aufgebaute und zu betreibende Robotersysteme zu entwickeln, mit denen ihre Anwendung auch im Baustellenbereich entsprechende Anreize findet.

Die Erfindung betrifft hierbei den spezifischen Bereich der Oberflächenbearbeitung von Gebäudestrukturen. Hierunter sind insbesondere vertikale oder horizontale Gebäudestrukturen wie Gebäudewände und Deckenstrukturen zu verstehen. Bevorzugt ist die Erfindung für den Einsatz im Innenraumbereich gedacht, sodass die angesprochenen Gebäudestrukturen beispielsweise Innenwandflächen oder Raumdeckenflächen sein können. Die Gebäudestrukturen können insbesondere flächige oder monotone Gebäudestrukturen sein. Monotone Gebäudestrukturen weisen eine im Mittel über ihre gesamte Oberfläche gleichbleibende Erstreckungsebene auf und sind beispielsweise überwiegend ebene Wandflächen mit wenig oder keinen aus der Wandfläche heraus ragenden oder sich von diesen abhebenden diskreten geometrischen Strukturen, Installationen und architektonischen Formelementen. Monotone Gebäudestrukturen können jedoch grundsätzlich eine im Wesentlichen oder im Mittel ebene Oberflächenstrukturierung im Sinne einer erhöhten Oberflächenrauhigkeit oder beispielsweise durch aneinander gereihte Stein- oder Fachwerkstrukturen aufweisen. Solche flächigen oder monotonen Wandflächen liegen häufig bei oder kurz nach der Gebäudeerrichtung oder -renovierung vor, bevor Installationen wie Heizungen oder Leitungen verlegt werden, sodass die Erfindung in entsprechenden Bauphasen vorteilhaft einsetzbar ist. Die Erfindung ist in ihrem Einsatzbereich nicht auf streng vertikale oder horizontale Gebäudestrukturen beschränkt, sondern kann grundsätzlich auch für den Einsatz an gewinkelt verlaufenden Strukturen wie beispielsweise Raumschrägen vorgesehen werden.

Die DE 44 25 924 A1 offenbart eine autonome mobile Einheit mit einem zusammenfaltbaren Manipulatorarm, dessen Ende beispielsweise als Pinsel ausgebildet sein kann. Der Arm besteht aus mehreren Segmenten, die an ihren Enden drehbar miteinander verbunden sind. Die mobile Einheit soll beispielsweise zum Anstreichen von Wänden eingesetzt werden können.

Der WO 2021/191662 A1 ist ein Malerroboter mit einem Roboterarm zu entnehmen, der mehrere Roboterachsen aufweist. Die Steuerung des Malerroboters erfolgt kameragestützt. Hierzu werden Objekte oder Teilbereiche, die von dem Farbauftrag ausgenommen sein sollen, mit einer farbigen Abdeckung versehen und von der Robotersteuerung über die Kamerasensorik erkannt, sodass diese keinen Farbauftrag erhalten.

Derartige komplexe Knickarmrobotersysteme sind auch in DE 10 2020 128 428 A1, DE 10 2009 042 014 A1, DE 10 2015 212 151 B4, DE 20 2020 005 627 U1, EP 2 631 041 A2 und US 2019/0118209 A1 beschrieben.

Die EP 3 655 169 A1 beschreibt einen autonomen Malerroboter für Innenraumwände mit einem Grundkörper, Rädern, einer Farbsprüheinheit, einer vertikalen Hubeinheit und einem Träger, über den die Hubeinheit von dem Grundkörper beabstandet ist. Über die Hubeinheit kann die Farbsprüheinheit vertikal auf und ab bewegt werden. Der Malerroboter kann zusätzlich horizontal verfahren werden. Durch die lediglich zwei möglichen Bewegungsrichtungen der Farbsprüheinheit durch die Hubeinheit oder das Verfahren des Roboters ist diese Vorrichtung hinsichtlich ihrer Einsatzmöglichkeiten und Flexibilität beschränkt.

Aus der Praxis sind weitere Maler- oder Lackierroboter für den mobilen Einsatzbereich bekannt, die mit klassischen Industrieroboterarmen versehen sind, die mehrere Roboterachsen aufweisen und hierdurch eine hohe Flexibilität hinsichtlich ihrer Freiheitsgrade erlauben. Zugleich erfordern diese Robotersysteme wiederum eine komplexe Bahnplanung und anspruchsvolle Bedienung. Zudem sind sie robust und schwer aufgebaut, um auch in Deckennähe noch stabil agieren zu können, und weisen hierdurch eine eingeschränkte Transportfähigkeit sowie einen erhöhten Energiebedarf auf.

DE 10 2018 123 416 A1 offenbart ein System zur Bearbeitung von Flächen von Gebäuden mit einem mobilen Fahrgestell, das zwei Hubeinrichtungen trägt, an denen ein Bearbeitungskopf-Träger verschwenkbar angeordnet ist. Der Bearbeitungskopf-Träger hat einen Linearantrieb, der sich mit einem Stempel horizontal in Richtung der zu bearbeitenden Wand oder Decke erstreckt und an seinem Ende einen Bearbeitungskopf trägt. Der Bearbeitungskopf ist über ein Gelenk in der Ebene des Linearantriebs schwenkbar an dem Stempel angebracht.

Vor diesem Hintergrund ist es Aufgabe der Erfindung, eine einfachere mobile, leichtgewichtige und gut zu transportierende Robotervorrichtung bereitzustellen, die insbesondere für den mobilen Baustelleneinsatz besser geeignet ist und dennoch eine hohe Flexibilität für den Einsatz an unterschiedlich dimensionierten Gebäudestrukturen aufweist. Des Weiteren sollen geeignete Verfahren zur Oberflächenbearbeitung mit einer solchen Robotervorrichtung angegeben werden.

Die Aufgabe wird mit einer mobilen Robotervorrichtung gemäß Anspruch 1 und dem Verfahren zur Oberflächenbearbeitung von Gebäudestrukturen gemäß Anspruch 12 gelöst. Vorteilhafte Ausführungsformen sind in den Unteransprüchen, der Beschreibung und den Figuren offenbart.

Gattungsgemäß weist die Robotervorrichtung eine fahrbare Plattform auf. Unter "fahrbar" wird hierbei insbesondere "selbstfahrbar" verstanden, sodass die Plattform einen Antrieb aufweist und nicht durch äußere Krafteinwirkung fortbewegt wird. Die Plattform kann somit beispielsweise eine Basisplatte oder ein Tragrahmen mit motorisch angetriebenen Rädern sein. Die Bewegungsrichtung der Plattform ist im Wesentlichen horizontal, also etwa parallel zum Erdboden. Der Antrieb kann signal- und energietechnisch mit der Steuereinrichtung und einer integrierten Energieversorgungseinheit der Robotervorrichtung oder mit einer externen Energieversorgung verbunden sein.

Die Robotervorrichtung weist eine Steuereinrichtung auf. Diese kann eine programmierbare Steuerung, insbesondere eine speicherprogrammierbare Steuerung (SPS) sein. Die Steuereinrichtung kann eine Bedieneinheit aufweisen. Die Programmierung kann direkt an der Robotervorrichtung erfolgen oder mittels eines externen Programmiermittels, sodass die Programminformationen anschließend durch Datenübertragung an die Robotervorrichtung übertragbar sind. Die Steuereinrichtung kann ergänzend eine externe Fernsteuereinheit aufweisen, mit der manuell Steuerbefehle, beispielsweise manuelle Korrekturen oder zusätzliche Verfahrwege der fahrbaren Plattform, über ein Bedienelement der Fernsteuereinheit an die Steuereinheit insbesondere drahtlos übertragbar sind. Die Erfindung kann grundsätzlich auch ein Computerprogramm umfassen, das von der Steuereinheit ausführbar ist, umfassend Befehle, die bei der Ausführung des Programms durch die Steuereinheit die Robotervorrichtung veranlassen, die erfindungsgemäßen Verfahren auszuführen.

Gattungsgemäß weist die Robotervorrichtung eine Robotereinheit auf, die eine Hubeinheit mit einer vertikalen Hubachse sowie einen an der Hubeinheit angeordneten Roboterarm mit zumindest einer Roboterachse aufweist. Unter "vertikal" wird hierbei eine entlang des Erdlots verlaufende Raumachse verstanden, sodass mit der Hubeinheit die Höhe des Roboterarms über dem Erdboden verändert werden kann. Unter einem Roboterarm wird grundsätzlich eine in Roboterachsen gegliederte Roboterkomponente mit einer offenen Kinematik verstanden, die also mit einem Ende in den Raum hineinragt und bei der nicht alle Roboterachsen mit jeweils zwei anderen Roboterachsen verbunden sind. Im Rahmen der vorliegenden Anmeldung kann ein Roboterarm mindestens eine Roboterachse umfassen, wobei jede Roboterachse unabhängig von anderen Roboterachsen antreibbar ist und eine Roboterachse rotatorisch oder translatorisch beweglich sein kann. Translatorische Roboterachsen ermöglichen geradlinige Bewegungen, rotatorische Roboterachsen erlauben Schwenkbewegungen um eine Schwenkachse. An dem Roboterarm können translatorische und rotatorische Roboterachsen seriell miteinander verkettet sein. Die Roboterachsen dienen dazu, das an dem Roboterarm angeordnete Bearbeitungswerkzeug im Raum zu bewegen.

Die Robotervorrichtung weist ein an dem Roboterarm angeordnetes Bearbeitungswerkzeug zum Bearbeiten einer Oberfläche der Gebäudestruktur auf. Das Bearbeitungswerkzeug bildet das letzte Element der kinematischen Kette des Roboterarms und kann somit auch als Endeffektor angesehen werden. Das Bearbeitungswerkzeug ist zur bahnförmigen Oberflächenbearbeitung von Gebäudestrukturen geeignet, indem es beispielsweise eine linien- oder streifenförmige Fläche der Gebäudestruktur bearbeiten, beispielsweise beschichtend, reinigend oder abrasiv bearbeiten kann. Hierzu kann das Bearbeitungswerkzeug beispielsweise eine Düse zum Ausgeben von Bearbeitungsmitteln wie etwa Beschichtungsmitteln, Reinigungsfluid oder Abrasionspartikeln aufweisen.

Es wird vorgeschlagen, dass das Bearbeitungswerkzeug quer von der linear verfahrbaren Auslegerachse abragt und eingerichtet ist, eine parallel zur Auslegerachse ausgerichtete Oberfläche zu bearbeiten. Damit lässt sich von dem Bearbeitungswerkzeug durch Veränderung der Höhe mit der Hubeinheit, durch Verschwenken der Auslegerachse in einer parallel zu der zu behandelnden Oberfläche liegenden Ebene und durch lineare Verschiebung der Auslegerachse eine seitlich neben der Auslegerachse bearbeiten. Die linear verfahrbare Auslegerachse des Roboterarms ist mit einem Linearaktuator gekoppelt und an voneinander beabstandeten Lineargleitlagern gelagert und durch den Linearaktuator linear verfahrbar angetrieben ist, wobei die linear verfahrbare Auslegerachse beidseits aus dem Linearaktuator herausragt. Damit wird bei einer kompakten Bauweise der mobilen Robotervorrichtung eine sehr große Bearbeitungsfläche bei unbewegter Plattform erreicht werden. Die aus Hubeinheit, schwenkbar an der Hubeinheit angeordnetem zylinderförmigen Hubaktor und darin verschiebbar gelagerter und beidseits herausstehender Auslegerachse und quer von der Auslegerachse abragendem Bearbeitungswerkzeug bestehende kinematische Kette ist verformungssteif und auf eine Bewegung in der durch die Hubeinheit und Auslegerachse aufgespannten Ebene parallel zu der zu behandelnden Oberfläche einschränkbar. Dies ermöglicht eine einfache Ansteuerung und stellt eine große mechanischen Stabilität sicher.

Gemäß einer Ausführungsform kann die Robotervorrichtung zu einer eine Oberflächenbeschichtung umfassenden Oberflächenbearbeitung eingerichtet sein, wobei das Bearbeitungswerkzeug als Auftragswerkzeug zum Auftragen eines Beschichtungsmittels ausgebildet ist. Hierbei kann die Robotervorrichtung aufgrund ihrer technischen Merkmale sehr effizient zum Beschichten von Oberflächen eingesetzt werden und gute Beschichtungsergebnisse an Gebäudestrukturen erreichen. Hierbei kann das Auftragswerkzeug beispielsweise eine Sprüh- oder Spritzpistole zum Auftragen des Beschichtungsmittels sein und hierzu beispielsweise eine Auftragsdüse aufweisen. Die Aufbereitung des Beschichtungsmittels für die Sprüh- oder Spritzpistole kann beispielsweise mit einer als Farbspritzgerät ausgeführten, integrierten Misch- oder Druckerzeugungseinheit der Robotervorrichtung oder mit einer externen, gesondert mit dem Auftragswerkzeug verbindbaren Misch- oder Druckerzeugungseinheit erfolgen. Es sind jedoch grundsätzlich auch andere geeignete Auftragswerkzeuge wie beispielsweise Pinsel- oder Walzenwerkzeuge denkbar. Das Beschichtungsmittel kann insbesondere im Wesentlichen eine Flüssigkeit oder ein Flüssigkeit-Feststoff-Gemisch sein. Das Beschichtungsmittel kann insbesondere ein Anstrichmittel oder Malstoff, beispielsweise eine Dispersionsfarbe, ein Lack oder eine Wandfarbe, aber auch ein Grundierungsmittel oder Spachtelmasse sein.

Grundsätzlich sind jedoch auch andere Bearbeitungsmittel, beispielsweise Stoffe zur mechanischen, chemischen oder biologischen Behandlung oder Reinigung von Gebäudestrukturen denkbar. Beispielsweise sind auch Sandstrahl- und Planschleifbearbeitungen mit der Erfindung realisierbar. Selbstverständlich ist grundsätzlich auch eine Oberflächenbearbeitung ohne ein zusätzliches Bearbeitungs- oder Beschichtungsmittel denkbar, beispielsweise durch Ausbildung des Bearbeitungswerkzeugs als mechanisch wirkendes Werkzeug wie etwa als Schleifgerät. Die Robotervorrichtung kann ein fest integriertes oder lösbares Reservoir für ein etwaiges Bearbeitungs- oder Beschichtungsmittel aufweisen, beispielsweise einen wiederbefüllbaren Farbbehälter. Die Robotervorrichtung kann auch einen Anschluss für Verbrauchsbehälter wie herkömmliche Farbeimer aufweisen. Das Bearbeitungswerkzeug kann grundsätzlich auch mit einem externen Reservoir für Bearbeitungs- oder Beschichtungsmittel fluidtechnisch verbunden werden, wobei hierzu beispielsweise ein Zuleitungsschlauch zwischen dem Bearbeitungswerkzeug und dem Reservoir verlegt wird.

Der Roboterarm weist eine translatorische Roboterachse auf, die als linear verfahrbare Auslegerachse ausgebildet ist. Die Auslegerachse ist somit geradlinig in ihrer Längsrichtung, also in Richtung ihrer Haupterstreckung, verlagerbar. Hierbei kann die Auslegerachse insgesamt entlang ihrer Erstreckung verfahren werden. Es ist zusätzlich denkbar, dass die Auslegerachse teilweise in sich selbst verfahrbar ist, also beispielsweise als fluchtende Teleskopachse ausgebildet ist. Dabei ist eine kombinierte lineare Verfahrbarkeit denkbar durch eine überlagerte Verlagerung der Auslegerachse insgesamt und in sich teleskopierend. Unter einem Ausleger wird vorliegend ein von der Robotereinheit abragender und einseitig gelagerter, im Wesentlichen starrer Arm verstanden, der über die tragende Konstruktion der Robotereinheit hinausragt und eine deutlich größere Längenausdehnung als Querschnittsausdehnung aufweist, wobei die Länge beispielsweise mindestens das Fünffache, Zehnfache, Zwanzigfache oder Fünfzigfache der Querschnittsbreite beträgt. Die Länge als größte Ausdehnung der Auslegerachse in einer Raumrichtung kann beispielsweise größer als die längste Ausdehnung der Plattform oder mindestens genauso lang oder größer als die längste Ausdehnung der Hubeinheit sein. Die Auslegerachse ist derart mit dem Hubaktuator an der Hubeinheit gelagert, dass sie in jedem Verfahrzustand der Auslegerachse einen kürzeren Auslegerabschnitt einerseits des Hubaktuators und seiner Lagerung an der Hubeinheit und einen längeren Auslegerabschnitt andererseits des Hubaktuators und seiner Lagerung an der Hubeinheit aufweist. Der längere Auslegerabschnitt kann hierbei insbesondere in Richtung des an dem Roboterarm angeordneten Bearbeitungswerkzeugs weisen. Bei der linearen Verschiebung der Auslegerachse am Hubaktuator ändert sich das Verhältnis der Länge des sich vom Hubaktuator zum Bearbeitungswerkzeug erstreckenden ersten Auslegerabschnitts der Auslegerachse zur Länge des sich in entgegengesetzter Richtung vom Hubaktuator zum dem Bearbeitungswerkzeug diametral gegenüberliegenden freien Ende der Auslegerachse erstreckenden zweiten Auslegerabschnitts.

Mit der Erfindung ist es möglich, eine einfach aufgebaute und flexibel einsetzbare Robotervorrichtung bereitzustellen, mit der Gebäudestrukturen maschinell und automatisiert oberflächenbearbeitet werden können. Der Aufbau der Robotereinheit ist mit einer Hubeinheit und einer Auslegerachse deutlich reduziert gegenüber klassischen, mehrfach gegliederten Industrierobotereinheiten, wobei durch die linear verfahrbare Auslegerachse dennoch eine ausreichende Flexibilität der Robotervorrichtung und eine hohe Reichweite des im Raum bewegbaren Bearbeitungswerkzeugs gegeben ist. Aufgrund der linear verfahrbaren Auslegerachse können mit dem Bearbeitungswerkzeug große Strecken an Gebäudestrukturen abgearbeitet werden. Durch die Auslegerachse wird eine ausreichende Steifigkeit und Robustheit der Robotervorrichtung beispielsweise für den Baustelleneinsatz gewährleistet, sodass auf komplexe Knickarmrobotersysteme verzichtet werden kann. Die überwiegend translatorisch wirkende Bewegungskinematik der Robotervorrichtung unterstützt das Abarbeiten gerader Bearbeitungsbahnen an den Gebäudestrukturen vorteilhaft. Überdies erfolgt die Bearbeitung aufgrund der von der Robotereinheit abragenden Auslegerachse mit einem höheren Abstand von der Robotereinheit als bei herkömmlichen robotergestützten Bearbeitungslösungen, sodass die Gefahr einer Verunreinigung der Robotereinheit durch die Oberflächenbearbeitung reduziert ist. Zugleich kann die Robotervorrichtung aufgrund ihrer schmalen Bauweise sehr nah an der zu bearbeitenden Gebäudestruktur arbeiten und kann daher beispielsweise auch in engen Raumbereichen wie schmalen Gebäudefluren problemlos eingesetzt werden. Die fahrbare Plattform kann hierbei in einer Gebrauchsposition der Robotervorrichtung parallel zu einer vertikalen Gebäudestruktur verfahrbar sein und die Längserstreckung der Auslegerachse kann in einer Ebene verlaufen, die parallel zu der vertikalen Gebäudestruktur liegt.

Die Robotervorrichtung kann beispielsweise mit einem Netzteil an eine externe Energieversorgung angeschlossen werden oder eine insbesondere lösbar integrierte Energieversorgungseinheit aufweisen. Die Energieversorgungseinheit kann beispielsweise wiederaufladbare Energiespeicher wie Akkumulatoren aufweisen, die einzeln oder gemeinsam von der Energieversorgungseinheit lösbar sind oder über einen Ladeanschluss der Energieversorgungseinheit direkt an der Robotervorrichtung bedarfsweise aufgeladen werden können. Die Energieversorgung oder Energieversorgungseinheit versorgt die einzelnen Komponenten der Robotervorrichtung wie beispielsweise den Antrieb der Plattform, die Antriebe der Hubeinheit und Roboterachsen sowie die Steuerung mit der erforderlichen elektrischen Energie.

Gemäß einer Ausführungsform ist die Auslegerachse mit einer ersten rotatorischen Roboterachse schwenkbar an der Hubeinheit angeordnet. Hierdurch kann der Bewegungsradius des an dem Roboterarm angeordneten Bearbeitungswerkzeugs im Raum vergrößert werden. Über eine Schwenkbewegung der Auslegerachse in Verbindung mit einem linearen Verfahren der Auslegerachse und bedarfsweise in Verbindung mit einem Anheben oder Absenken der Auslegerachse mittels der Hubeinheit können beispielsweise gerade vertikale oder auch horizontale Bearbeitungsbahnen oder Mischformen wie beispielsweise bogenförmige Bearbeitungsbahnen mittels des Bearbeitungswerkzeugs auf der Gebäudestruktur abgearbeitet werden. Die Auslegerachse kann derart schwenkbar an der Hubeinheit angeordnet sein, dass sie um eine Schwenkachse schwenkbar ist, die die Hubachse senkrecht schneidet. Die Auslegerachse kann innerhalb eines vordefinierten, beispielsweise programmierbaren Schwenkwinkels schwenkbar sein, der zum Beispiel zwischen 0 und 180°, bevorzugt zwischen 30° und 150° oder weiter bevorzugt zwischen 60° und 120° betragen kann. Die schwenkbare Anordnung der Auslegerachse an der Hubeinheit kann beispielsweise über ein antreibbares Drehgelenk erfolgen, das eine erste rotatorische Roboterachse der Robotereinheit bildet.

Gemäß einer Ausführungsform ist die Auslegerachse mit einer zweiten rotatorischen Roboterachse um ihre Längsachse rotierbar ausgebildet. Die Auslegerachse kann somit nicht nur linear verfahren werden, sondern auch um sich selbst rotieren. Hierdurch kann der Bewegungsspielraum des Bearbeitungswerkzeugs an dem Roboterarm weiter optimiert werden. Beispielsweise kann das Bearbeitungswerkzeug durch Rotation der Auslegerachse optimal in einen Winkel zwischen zwei aneinander anstoßenden Gebäudestrukturen, beispielsweise zwischen einer Innenraumwand und einer Raumdecke, eingepasst werden.

Gemäß einer Ausführungsform ist das Bearbeitungswerkzeug mit einer dritten rotatorischen Roboterachse schwenkbar an der Auslegerachse angeordnet. Hierdurch kann die Orientierung des Bearbeitungswerkzeugs relativ zu der Gebäudestruktur und relativ zu der Auslegerachse bedarfsgerecht angepasst werden. Insbesondere kann das Bearbeitungswerkzeug während des Betriebs der Robotervorrichtung schwenkbar sein, um die Ausrichtung des Bearbeitungswerkzeugs zur Gebäudestruktur kontinuierlich anpassen zu können. Insbesondere ist auf das Bearbeitungswerkzeug derart schwenkbar an der Auslegerachse angeordnet, dass es um eine horizontale Schwenkachse, die senkrecht auf der Erstreckungsebene der Auslegerachse steht, schwenkbar ist. Mittels der schwenkbaren Anordnung des Bearbeitungswerkzeugs kann beispielsweise eine Düse des Bearbeitungswerkzeugs oder eine Werkzeugkomponente wie eine Walze konstant in einer horizontalen Ausrichtung zur Gebäudestruktur an der Auslegerachse gehalten werden. Die schwenkbare Anordnung des Bearbeitungswerkzeugs kann beispielsweise über ein antreibbares Drehgelenk erfolgen, das eine dritte rotatorische Achse der Robotereinheit bildet. Weist die Auslegerachse einen kürzeren und einen längeren Auslegerabschnitt bezüglich ihrer Lagerung an der Hubeinheit auf, ist das Bearbeitungswerkzeug im Wesentlichen am Ende des längeren Auslegerabschnitts angeordnet.

Es kann auch vorgesehen sein, dass das Bearbeitungswerkzeug mit einer dritten rotatorischen Roboterachse und mit einer vierten rotatorischen Roboterachse um zwei verschiedene Schwenkachsen schwenkbar ist, die senkrecht aufeinander stehen. Hierbei ist eine erste Schwenkachse des Bearbeitungswerkzeugs eine horizontale Schwenkachse, die senkrecht auf der Erstreckungsebene der Auslegerachse steht. Eine zweite Schwenkachse des Bearbeitungswerkzeugs ist eine horizontale Schwenkachse, die die erste Schwenkachse senkrecht schneidet und parallel zu einer Erstreckungsebene der Auslegerachse verläuft. Mit einer Schwenkbewegung um die erste Schwenkachse kann das Bearbeitungswerkzeug konstant in einer horizontalen Ausrichtung zur Gebäudestruktur gehalten werden. Mit einer Schwenkbewegung um die zweite Schwenkachse kann das Bearbeitungsergebnis in Randbereichen von Gebäudestrukturen, an der beispielsweise eine vertikale Gebäudestruktur an eine horizontale Gebäudestruktur stößt, verbessert werden. Das Bearbeitungswerkzeug kann jeweils innerhalb eines vordefinierten, beispielsweise programmierbaren Schwenkwinkels schwenkbar sein, der zum Beispiel zwischen 0 und 180°, bevorzugt zwischen 30° und 150° oder weiter bevorzugt zwischen 60° und 120° betragen kann. Die dritte und die vierte rotatorische Achse können beispielsweise über ein Differentialgetriebe realisiert und unabhängig voneinander bewegbar sein.

Gemäß einer Ausführungsform weist die Robotereinheit genau eine Hubeinheit auf, die über eine erste rotatorische Roboterachse mit genau einer Auslegerachse verbunden ist, die wiederum über eine dritte rotatorische Roboterachse mit dem Bearbeitungswerkzeug verbunden ist. Hierdurch wird ein sehr kompaktes, robustes und kostengünstiges Robotersystem gegenüber herkömmlichen Knickarmrobotern bereitgestellt, ohne Kompromisse bei der Flexibilität und Reichweite der Robotervorrichtung eingehen zu müssen. Die Robotervorrichtung gemäß dieser Ausführungsform weist hierbei gegenüber den auf fahrbaren Plattformen angeordneten Industrierobotern mit insgesamt 7 Freiheitsgraden eine reduzierte Anzahl von 5 bis 6 Freiheitsgraden auf (Translation der Plattform, Translation der Hubeinheit, Schwenken der Auslegerachse, Translation der Auslegerachse, Rotation des Bearbeitungswerkzeugs entweder um eine oder zwei Raumachsen), ohne dass die Roboterreichweite oder die Qualität der Oberflächenbearbeitung beeinträchtigt werden. Optional kann noch genau eine zweite rotatorische Roboterachse durch die Rotierbarkeit der Auslegerachse um ihre Längsachse ergänzt und dennoch ein kompaktes Robotersystem erhalten werden.

Gemäß einer Ausführungsform der Erfindung ist es vorteilhaft, wenn die Robotervorrichtung modular aufgebaut ist. Bei einem modularisierten Aufbau werden Systeme aus Untereinheiten entlang definierter Stellen zusammengesetzt und funktionieren dann als Ganzes, während bei einem integralen Aufbau die Untereinheiten nicht lösbar miteinander verbunden sind und häufig nicht zerstörungsfrei oder zumindest nicht ohne größeren Aufwand voneinander getrennt werden können. Mit einer modular aufgebauten Robotervorrichtung kann diese leicht in ihre Untereinheiten zerlegt und transportiert sowie vor Ort bedarfsweise zusammengesetzt werden. Hierbei können auch unterschiedliche Untereinheiten gegeneinander ausgetauscht werden, beispielsweise unterschiedliche Bearbeitungswerkzeuge oder Reservoirs für das Beschichtungsmittel. Die Untereinheiten der Robotervorrichtung können beispielsweise die Plattform, die Steuereinrichtung, die Robotereinheit, die wiederum in eigene Untereinheiten wie Hubeinheit und Auslegerachse zerlegbar sein kann, sowie das Bearbeitungswerkzeug und gegebenenfalls eine Energieversorgungseinheit, ein Zuführungssystem für die Zuführung des Bearbeitungsmittels zum Bearbeitungswerkzeug und ein Reservoir sein.

Die Robotervorrichtung oder einzelne Komponenten der Robotervorrichtung können in Leichtbauweise hergestellt sein, um ein angestrebtes Maximalgewicht der Robotervorrichtung von 500 kg nicht zu überschreiten. Beispielsweise können für Komponenten der Robotervorrichtung Leichtbauwerkstoffe wie etwa Aluminium oder Faserverbundwerkstoffe eingesetzt werden.

Die Robotervorrichtung kann eine Hindernissensorik zur Erkennung von Hindernissen im Verfahrweg der fahrbaren Plattform und/oder eine Objektsensorik zur Erkennung von nicht zu bearbeitenden Objekten an der Gebäudestruktur aufweisen. Die Sensoriken können insbesondere optische Sensoriken, beispielsweise Lidar-Hindernissensoriken oder Kamera-Objektsensoriken sein. Eine Kamera-Objektsensorik kann hierbei besonders einfach und kostengünstig ausgeführt sein, wenn diese lediglich auf einer Farb- oder Mustererkennung mit einer einfachen Bildverarbeitungseinrichtung basiert und die nicht zu bearbeitenden Objekte mit einer entsprechenden Farb- oder Mustermarkierung versehen sind. Die Objektsensorik kann beispielsweise an der Hubeinheit, der Auslegerachse, der Plattform oder an dem Bearbeitungswerkzeug angeordnet sein. Die Hindernissensorik kann beispielsweise an der Plattform angeordnet sein.

Beidseits der Hubachse der Hubeinheit können jeweils mehrere Kameras angeordnet sein, die auf unterschiedliche, sich teilweise überlappende Bereiche der zu bearbeitenden Oberfläche ausgerichtet sind. Die Kameras können jeweils eine Linsenoptik und ein vor der Linsenoptik angeordnetes Verschlusselement zum Schutz vor Verschmutzung der Linsenoptik bei der Oberflächenbearbeitung haben. Die Robotervorrichtung ist dann zum kurzzeitigen Öffnen eines jeweils ausgewählten Verschlusselementes für eine Bildaufnahme, zur optischen Vermessung der räumlichen Lage der Robotervorrichtung in Bezug zu der zu bearbeitenden Oberfläche aus den aufgenommenen Bildern und zur Ansteuerung der Robotervorrichtung mit Hilfe der aus den aufgenommenen Bildern ermittelten räumlichen Lage ausgebildet. Damit können in unterschiedlichen Bewegungszuständen ausgewählte Kameras kurzzeitig aktiviert und deren Linsen zur Bildaufnahme mit dem Verschlusselement geöffnet werden. Die Linsen werden so insb. bei Farbauftrag bestmöglich vor Verschmutzung durch Farbpartikel geschützt. Es werden vorzugsweise die Kameras zur Bildausnahme ausgewählt, die momentan nicht durch die kinematischen Roboterstrukturen verdeckt sind.

Der Roboterarm kann ein Zuführungssystem für die Zuführung eines Bearbeitungsmittels zum Bearbeitungswerkzeug oder eine Schnittstelle zum Anschluss eines solchen Zuführungssystems aufweisen. Das Zuführungssystem kann beispielsweise auch integral mit dem Roboterarm ausgebildet sein. Das Zuführungssystem kann beispielsweise als Fluidführungssystem für Flüssigkeiten und Gase ausgebildet sein, insbesondere kann es sich um ein Hochdruckzuführungssystem zur Zuführung von unter einem Druck von mehreren bar stehenden Fluiden handeln. Hierbei ist nicht ausgeschlossen, dass dem Fluid auch Feststoffpartikel zugesetzt sind, beispielsweise Abrasionspartikel. Das Zuführungssystem kann beispielsweise eine Lanze umfassen, die einen innenliegenden Zuführungskanal, eine Düse und gegebenenfalls einen Anschluss für die Schnittstelle des Roboterarms aufweisen kann. Das in dem Zuführungssystem geführte Bearbeitungsmittel kann beispielsweise ein Beschichtungsmittel sein. Das Zuführungssystem kann auch eine herkömmliche Farbsprühlanze sein. Das Zuführungssystem kann selbst einen Teil des Roboterarms und beispielsweise eine Verlängerung des Roboterarms bilden. Durch das integrierte oder anschließbare Zuführungssystem ist es nicht erforderlich, beispielsweise einen gesonderten Schlauch zwischen dem Bearbeitungswerkzeug der Robotervorrichtung und einem Reservoir für Bearbeitungsmittel zu verlegen, der im Bearbeitungsbereich der zu bearbeitenden Oberfläche störend wirken könnte. Zudem muss beispielsweise eine zum Druckaufbau erforderliche Sprühpistole nicht am Ende des Roboterarms in Höhe des Bearbeitungswerkzeugs installiert werden, sondern kann zwischen dem Roboterarm und der Lanze angeordnet werden, sodass eine Gewichtsersparnis am Bearbeitungsende des Roboterarms vorliegt und die Robotereinheit kompakter und robuster aufgebaut ist.

Gemäß einer Ausführungsform weist das Zuführungssystem schaltbare oder bewegliche Komponenten auf, die von der Steuereinrichtung der Robotervorrichtung ansteuerbar sind. Schaltbare oder bewegliche Komponenten können beispielsweise ein Ventil und/oder eine winkelverstellbare Düse sein, die mithilfe der Steuereinrichtung betätigbar und verstellbar sind.

Das Bearbeitungswerkzeug kann ein mechanisch auf die zu bearbeitende Oberfläche wirkendes Schleifgerät sein, wobei das Bearbeitungswerkzeug mit einer Druckfeder zur Ausübung einer quer von der linear verfahrbaren Auslegerachse auf die zu bearbeitende Oberfläche wirkenden Andruckkraft mit der Auslegerachse gekoppelt ist. Mit Hilfe der Druckfeder wird ein zur Oberflächenbearbeitung notwendiger Anpressdruck sichergestellt. Denkbar ist, dass die Druckfeder mit einem Linearmotor gekoppelt ist, um so die Vorspannung der Druckfeder zu variieren. Damit kann der gewünschte Anpressdruck eingestellt und der Abstand des Bearbeitungswerkzeuges von der zu bearbeitenden Oberfläche eingestellt werden.

Ein zusätzlicher Schwenkwinkel qₛ kann zum Verschwenken des Auslegerabschnitts d₃ bzw. Roboterarms relativ zur Plattform in einem Winkel q₃ seitlich von der Plattform weg ein weiterer Freiheitsgrad eingeführt wird. Damit lässt sich der Abstand des Bearbeitungswerkzeuges zur Wand und die Kontaktkraft variieren, indem das Ende des Auslegerabschnitts mit dem Bearbeitungswerkzeug zu der zu bearbeitenden Oberfläche der Wand hingeschwenkt oder davon weggeschwenkt wird. Zwischen der Bewegungsrichtung der Plattform und der Erstreckungsrichtung des Auslegerabschnitts kann somit ein Schwenkwinkel qₛ eingestellt werden, der ohne diesen Freiheitsgrad Null betragen würde. Für das Bearbeiten einer Decke, bspw. durch Schleifen, kann dieser Schwenkwinkel qₛ genutzt werden, um die Decke nicht nur in einer Richtung zu schleifen, sondern auch in die Fläche hineinzuarbeiten. Damit lassen sich auch kreisende Bewegungen in der Fläche realisieren.

Mit diesem zusätzlichen Schwenkwinkel qₛ kann einerseits eine Decke in zwei Dimensionen geschliffen werden und andererseits kann eine Andruckkraft an der Wand erzeugt und der Abstand des Bearbeitungswerkzeugs eingestellt werden. Dies ist insbesondere sinnvoll, wenn die Andruckkraft ansonsten nur durch eine Federspannung sichergestellt wird und kein Aktor in der Schnittstelle in dem dem Bearbeitungswerkzeug oder zwischen dem Auslegerabschnitt und dem Bearbeitungswerkzeug zur Abstandseinstellung vorhanden ist bzw. der Verstellweg eines solchen Aktors begrenzt ist.

Mit diesem zusätzlichen der Schwenkwinkel qₛ kann auch die Bearbeitung von Wand- und Deckenflächen durch Farbauftrag, insb. mittels Sprühen, verbessert werden. Beim Schwenken einer Sprühpistole im Bodenbereich nach unten bzw. im Deckenbereich nach oben, um die Eckbereiche zu erfassen, verändert sich der Abstand zwischen Sprühdüse und Wandfläche. Dies hat zur Folge, dass die Bahn, die gesprüht wird, breiter wird. Um parallele Bahnen gleichmäßig mit Farbe besprühen zu können, kann der Abstand mit Hilfe des zusätzlichen Schwenkwinkels qₛ konstant gehalten werden.

Die beschriebenen Robotervorrichtungen können zur Durchführung der erfindungsgemäßen Verfahren eingerichtet sein.

Die Aufgabe wird auch mit einem Verfahren zur bahnförmigen Oberflächenbearbeitung von vertikalen Gebäudestrukturen gelöst. Das Verfahren umfasst die Schritte:
a) Bereitstellen einer Robotervorrichtung gemäß einem der vorbeschriebenen Merkmale und Ausrichten der Robotervorrichtung an der zu bearbeitenden vertikalen Gebäudestruktur;
b) Aktivieren des Bearbeitungswerkzeugs;
c) Abarbeiten einer vertikalen Bearbeitungsbahn durch Ansteuern der Robotereinheit derart, dass die Hubeinheit und der Roboterarm eine vordefinierte Bewegungsabfolge durchführen, mit der das quer von der linear verfahrbaren Auslegerachse des Roboterarms abragende Bearbeitungswerkzeug auf einer geraden vertikalen Bewegungsbahn über die parallel zur Auslegerachse ausgerichtete Oberfläche der zu bearbeitenden Gebäudestruktur geführt wird, indem der Roboterarm über die Hubeinheit in der Höhe verlagert und um einen Schwenkwinkel an der Hubeinheit verschwenkt wird, und die linear verfahrbare Auslegerachse des Roboterarms mit dem Linearaktuator linear verfahren wird.

In Schritt a) erfolgt das Bereitstellen und Ausrichten der Robotervorrichtung an der Gebäudestruktur. Die vertikale Gebäudestruktur kann beispielsweise eine vertikale Innenraumwand sein. Das Ausrichten kann beispielsweise derart erfolgen, dass die Robotervorrichtung so positioniert wird, dass sich der Roboterarm der Robotervorrichtung in einer Ebene erstreckt, die im Wesentlichen parallel zu der vertikalen Gebäudestruktur verläuft. Zudem kann die Robotervorrichtung in dieser Orientierung mit ihrer fahrbaren Plattform im Wesentlichen parallel zu der Gebäudestruktur verfahrbar sein. Das Ausrichten kann auch das Verfahren der Plattform und des Roboterarms in eine Startposition umfassen, in der das Bearbeitungswerkzeug auf einen Startbereich an der Gebäudestruktur gerichtet ist.

In Schritt b) erfolgt das Aktivieren des Bearbeitungswerkzeugs, beispielsweise durch Einschalten eines Farbspritz- oder Sandstrahlgeräts und/oder Fördern von Bearbeitungs- oder Beschichtungsmittel aus einem Reservoir zu dem Bearbeitungswerkzeug und Ausgabe des Bearbeitungs- oder Beschichtungsmittels an dem Bearbeitungswerkzeug, beispielsweise mittels einer Düse.

Der Schritt c) beginnt bevorzugt zugleich oder mit geringem zeitlichem Versatz zu Schritt b). In diesem Schritt werden die Hubeinheit und/oder der Roboterarm durch Steuersignale der Steuereinrichtung so angetrieben, dass die Robotereinheit mit ihren Roboterachsen eine vordefinierte Bewegungsabfolge durchführt, um das Bearbeitungswerkzeug auf einer geraden vertikalen Bewegungsbahn über die Gebäudestruktur zu führen. Mit dem aktivierten Bearbeitungswerkzeug wird hierbei eine vertikale Bearbeitungsbahn abgearbeitet. In einigen Ausführungsformen kann das Abarbeiten einer Bearbeitungsbahn das Erzeugen einer Beschichtungsbahn durch einen Auftrag von Beschichtungsmittel sein. Bei der Bewegungsabfolge können insbesondere auch mehrere Achsenbewegungen gleichzeitig oder mit geringem zeitlichem Versatz und teilweise oder vollständig überlagert erfolgen. Beispielsweise kann der Roboterarm oder eine Auslegerachse über die Hubeinheit in ihrer Höhe verlagert, um einen vordefinierten Schwenkwinkel geschwenkt und linear verfahren werden, um den sich während einer geraden vertikalen Bewegungsbahn des Bearbeitungswerkzeugs kontinuierlich ändernden Abstand des Bearbeitungswerkzeugs von der Robotervorrichtung kinematisch sauber abzubilden. Vertikale Bewegungsbahnen können in einer Aufwärts- oder in einer Abwärtsbewegung des Roboterarms erfolgen. Beispielsweise kann bei einer vorgesehenen Aufwärtsbewegung des Roboterarms zur Abarbeitung einer vertikalen Bearbeitungsbahn der Roboterarm oder eine Auslegerachse von einem unteren Ende der vertikalen Bearbeitungsbahn etwa bis zu einer Mitte der Bearbeitungsbahn um eine bestimmte Hubstrecke angehoben, um einen bestimmten Schwenkwinkel geschwenkt und um eine bestimmte Linearstrecke in Richtung der Robotervorrichtung verfahren werden, um nach Erreichen der Mitte der vertikalen Bearbeitungsbahn bis zu einem oberen Ende der Bearbeitungsbahn um eine weitere Hubstrecke zusätzlich angehoben, um einen zusätzlichen Schwenkwinkel in der gleichen Schwenkrichtung wie der des bestimmten Schwenkwinkels geschwenkt und um eine Linearstrecke von der Robotervorrichtung weg verfahren zu werden, die in etwa der bestimmten Linearstrecke in entgegengesetzter Verfahrrichtung entspricht. Bei einer vorgesehenen Abwärtsbewegung des Roboterarms zur Abarbeitung einer vertikalen Bearbeitungsbahn kann die Bewegungsabfolge teilweise umgekehrt ablaufen, sodass der Roboterarm oder die Auslegerachse gesenkt statt gehoben, in einem entgegengesetzten Schwenkwinkel geschwenkt, jedoch ebenso zunächst in Richtung der Robotervorrichtung und anschließend wieder von ihr weg verfahren wird. Die Vordefinition der Bewegungsabfolge kann beispielsweise über eine entsprechende Programmierung der Steuereinrichtung in Abhängigkeit von Parametern wie beispielsweise der Raumhöhe, Oberflächenbeschaffenheit der Gebäudestruktur oder verwendetem Bearbeitungswerkzeug, z. B. entsprechend der düsenabhängigen Bearbeitungsbreite erfolgen.

Gemäß einer vorteilhaften Ausführungsform des Verfahrens kann sich an das Abarbeiten einer vertikalen Bearbeitungsbahn ein Verlagern des Bearbeitungswerkzeugs entlang einer vorgegebenen Verlagerungsstrecke von einem Ende der vertikalen Bearbeitungsbahn zu einem Anfang einer weiteren vertikalen Bearbeitungsbahn anschließen. Hierdurch wird das Bearbeitungswerkzeug in eine erneute Bahnbearbeitungsbereitschaft versetzt. Die vorgegebene Verlagerungsstrecke kann je nach Bearbeitungsart und -zweck beispielsweise geradlinig, aber auch bogenförmig verlaufen. Die weitere vertikale Bearbeitungsbahn kann zur teilweisen Überlappung mit der zuvor abgearbeiteten vertikalen Bearbeitungsbahn, zum aneinander anstoßenden Bahnverlauf oder auch mit einem Abstand zu der zuvor abgearbeiteten vertikalen Bearbeitungsbahn vorgesehen sein. In dem Verlagerungs-Schritt werden die Hubeinheit und der Roboterarm durch Steuersignale der Steuereinrichtung so angetrieben, dass die Robotereinheit mit ihren Roboterachsen eine vordefinierte Bewegungsabfolge durchführt, um das Bearbeitungswerkzeug auf einer geradlinigen oder bogenförmigen Bewegungsbahn über die Gebäudestruktur zu führen. Je nach Bearbeitungsart und -zweck kann während des Verlagerns des Bearbeitungswerkzeugs dieses aktiviert bleiben oder nicht. Mit dem aktivierten Bearbeitungswerkzeug wird hierbei während des Verlagerns eine geradlinige oder bogenförmige Bearbeitungsbahn abgearbeitet. Mit einem deaktivierten Bearbeitungswerkzeug erfolgt lediglich eine Positionsänderung des Bearbeitungswerkzeugs ohne Bearbeitung der Oberfläche der Gebäudestruktur. Bei der Bewegungsabfolge können insbesondere auch mehrere Achsenbewegungen gleichzeitig oder mit geringem zeitlichem Versatz und teilweise oder vollständig überlagert erfolgen. Beispielsweise kann der Roboterarm oder eine Auslegerachse über die Hubeinheit um eine definierte Hubstrecke angehoben werden, die geringer ist als die bestimmte Hubstrecke bei der vertikalen Bearbeitungsbahn, und um einen definierten Schwenkwinkel geschwenkt werden, der geringer ist als der bestimmte Schwenkwinkel bei der vertikalen Bearbeitungsbahn, und um eine definierte Linearstrecke verfahren werden, die geringer ist als die bestimmte Linearstrecke bei der vertikalen Bearbeitungsbahn. Die Vordefinition der Bewegungsabfolge kann auch hier beispielsweise über eine entsprechende Programmierung der Steuereinrichtung in Abhängigkeit von Parametern wie beispielsweise der Raumhöhe, Oberflächenbeschaffenheit der Gebäudestruktur oder verwendetem Bearbeitungswerkzeug, z. B. entsprechend der düsenabhängigen Bearbeitungsbreite erfolgen.

Vertikale Bearbeitungsbahnen und Verlagerungen des Bearbeitungswerkzeugs können bevorzugt ineinander übergehen und kontinuierlich seriell aneinander anschließend abgearbeitet werden. Eine Verlagerung kann an einem oberen, beispielsweise einer Raumdecke zugewandten Ende oder an einem unteren, beispielsweise einem Fußboden zugewandten Ende einer vertikalen Bearbeitungsbahn durchgeführt werden.

Bevorzugt wird die Plattform der Robotervorrichtung während des Abarbeitens einer vertikalen Bearbeitungsbahn oder einer Verlagerung des Bearbeitungswerkzeugs an einer vertikalen Gebäudestruktur nicht verfahren.

Das erfindungsgemäße Verfahren kann in Bearbeitungszyklen unterteilt sein, wobei mehrere Bearbeitungszyklen seriell nacheinander ausgeführt werden können. Ein Bearbeitungszyklus kann beispielsweise durch das Abarbeiten einer vertikalen Bearbeitungsbahn in einer ersten Raumrichtung, durch ein anschließendes Verlagern des Bearbeitungswerkzeugs in einer zweiten Raumrichtung, durch ein anschließendes Abarbeiten einer vertikalen Bearbeitungsbahn in einer dritten, der ersten Raumrichtung entgegengesetzten Raumrichtung sowie durch ein anschließendes Verlagern des Bearbeitungswerkzeugs in einer vierten, der zweiten Raumrichtung entsprechenden oder entgegengesetzten Raumrichtung gebildet sein. Hierbei kann beispielsweise das Abarbeiten einer vertikalen Bearbeitungsbahn in einer ersten Raumrichtung mit einer Aufwärtsbewegung des Roboterarms und in einer dritten Raumrichtung mit einer Abwärtsbewegung des Roboterarms verbunden sein oder umgekehrt. Hierbei kann beispielsweise das Verlagern des Bearbeitungswerkzeugs in einer zweiten Raumrichtung mit einer linksgerichteten Bewegung des Roboterarms und in einer vierten Raumrichtung mit einer rechtsgerichteten Bewegung des Roboterarms verbunden sein oder umgekehrt, oder die Verlagerungen erfolgen jeweils beide mit einer linksgerichteten oder rechtsgerichteten Bewegung.

In einer Ausführungsform erfolgt zunächst das Abarbeiten einer ersten vertikalen Bearbeitungsbahn in einer Aufwärtsrichtung, dann das Verlagern des Bearbeitungswerkzeugs entlang einer ersten vorgegebenen Verlagerungsstrecke, dann das Abarbeiten einer zweiten vertikalen Bearbeitungsbahn in einer Abwärtsrichtung und dann das Verlagern des Bearbeitungswerkzeugs entlang einer zweiten Verlagerungsstrecke in Richtung von der zweiten vertikalen Bearbeitungsbahn zur ersten vertikalen Bearbeitungsbahn. Das Zurückverlagern dient hierbei einem Zurückversetzen des Bearbeitungswerkzeugs in seine ursprüngliche Ausgangsposition, sodass die Programmierung der überlagerten Bewegungen der Robotervorrichtung einschließlich des Verfahrens der Plattform um einen vordefinierten Verfahrweg vereinfacht wird. Im Prinzip wird hierbei in einem Bearbeitungszyklus eine rechteck- oder ellipsenförmige Bewegungsbahn des Bearbeitungswerkzeugs durchgeführt. Hierdurch kann ein sauberes Bearbeitungsergebnis für den während eines Bearbeitungszyklus bearbeiteten Teil der Gebäudestruktur gewährleistet werden. In anderen Ausführungsformen erfolgt zunächst das Abarbeiten einer ersten vertikalen Bearbeitungsbahn in einer Aufwärtsrichtung, dann das Verlagern des Bearbeitungswerkzeugs entlang einer ersten vorgegebenen Verlagerungsstrecke, dann das Abarbeiten einer zweiten vertikalen Bearbeitungsbahn in einer Abwärtsrichtung und dann das Verlagern des Bearbeitungswerkzeugs entlang einer zweiten Verlagerungsstrecke in einer von der ersten vertikalen Bearbeitungsbahn abgewandten Richtung. Im Prinzip wird hierbei in einem Bearbeitungszyklus eine serpentinenförmige Bewegungsbahn des Bearbeitungswerkzeugs durchgeführt. Je nach aktueller Konfiguration der Robotereinheit kann die Verlagerungsstrecke ausgehend von einer vertikalen Bearbeitungsbahn näher an der Robotervorrichtung oder weiter von ihr weg als die vertikale Bearbeitungsbahn liegen.

Bevorzugt wird die Plattform der Robotervorrichtung während eines Bearbeitungszyklus zum Bearbeiten einer vertikalen Gebäudestruktur nicht verfahren.

Gemäß einer vorteilhaften Ausführungsform wird zwischen zwei Bearbeitungszyklen das Bearbeitungswerkzeug deaktiviert und die fahrbare Plattform um eine vordefinierte Verfahrstrecke horizontal verfahren. Hierdurch wird ein sauberer Übergang zwischen zwei Bearbeitungszyklen ermöglicht und eine unerwünschte Überlagerung von aufgetragenem Bearbeitungsmittel zwischen zwei Bearbeitungsbahnen vermieden. Die vordefinierte Verfahrstrecke kann beispielsweise in Abhängigkeit der Breite von zwei vertikalen Bearbeitungsbahnen festgelegt werden.

Für das erfindungsgemäße Verfahren ist es denkbar, dass zwischen zwei Bearbeitungszyklen ein Konfigurationswechsel vorgenommen wird, indem der Roboterarm oder eine Auslegerachse um einen Konfigurationsschwenkwinkel geschwenkt wird, und in dem zweiten der zwei Bearbeitungszyklen der Roboterarm eine vordefinierte Bewegungsabfolge auf einer anderen Seite der Robotervorrichtung als in dem ersten der beiden Bearbeitungszyklen durchführt. Somit wird während eines Konfigurationswechsels die Seite getauscht, auf der bezogen auf die Robotervorrichtung der Auftrag von Beschichtungsmittel erfolgt. Auf diese Weise kann die Robotervorrichtung beispielsweise zunächst eine rechte Hälfte einer vertikalen Gebäudestruktur bearbeiten und anschließend eine linke Hälfte der Gebäudestruktur, wobei auch andere Verhältnisse als jeweils Hälften denkbar sind wie beispielsweise 1/3 zu 2/3. Beispielsweise kann der Konfigurationswechsel durchgeführt werden, wenn die Robotervorrichtung bei einer Verfahrbewegung der Plattform von einer rechten zu einer linken Kante der Gebäudestruktur einen größeren Abstand zu der rechten Kante erreicht hat als der Abstand zu der linken Kante der Gebäudestruktur beträgt oder umgekehrt. Grundsätzlich erfolgt der Konfigurationswechsel, bevor die Robotervorrichtung die einer Startkante gegenüberliegende Endkante der Gebäudestruktur erreicht. Mit einem Konfigurationswechsel kann vermieden werden, dass die Robotervorrichtung bei einem Anstoßen an eine an die vertikale Gebäudestruktur angrenzende weitere vertikale Gebäudestruktur nicht weiter horizontal verfahren werden kann und hierdurch eine vollständige Bearbeitung der Gebäudestruktur nicht fertigstellen könnte. Hierbei muss die Robotervorrichtung nicht neu platziert oder ausgerichtet werden, was die Komplexität der Steuereinrichtung beim Manövrieren der Robotervorrichtung sowie den etwaigen Aufwand für Bedienpersonal deutlich reduziert. Die Robotervorrichtung wird somit bestimmungsgemäß nur eindimensional entlang der zu bearbeitenden vertikalen Gebäudestruktur verfahren.

Bevorzugt wird im Voraus oder im Anschluss an einen Konfigurationswechsel die Plattform um eine definierte Verfahrstrecke entgegen ihrer vorherigen Verfahrrichtung zurückverfahren, um den während des Konfigurationswechsels zwangsläufig durch den Konfigurationsschwenkwinkel übersprungenen Teilbereich der Gebäudestruktur ebenfalls bearbeiten zu können. Der Konfigurationsschwenkwinkel kann insbesondere ein Winkel größer 180° sein.

Die Aufgabe wird auch mit einem Verfahren zur bahnförmigen Oberflächenbearbeitung von horizontalen Gebäudestrukturen gelöst. Das Verfahren umfasst die Schritte:
a) Bereitstellen einer Robotervorrichtung gemäß einem der vorbeschriebenen Merkmale und Ausrichten der Robotervorrichtung an der zu bearbeitenden horizontalen Gebäudestruktur;
b) Aktivieren des Bearbeitungswerkzeugs;
c) Abarbeiten einer horizontalen Bearbeitungsbahn durch Ansteuern der Robotereinheit derart, dass das Bearbeitungswerkzeug um 90° an der Auslegerachse verschwenkt wird, so dass das Bearbeitungswerkzeug von der Auslegerachse in Richtung der vertikalen Hubachse abragt, und dass die Hubeinheit und der Roboterarm eine vordefinierte Bewegungsabfolge durchführen, mit der das Bearbeitungswerkzeug auf einer geraden horizontalen Bewegungsbahn über die zu bearbeitende Gebäudestruktur geführt wird, indem der Roboterarm über die Hubeinheit in der Höhe verlagert und um einen Schwenkwinkel an der Hubeinheit verschwenkt wird, und die linear verfahrbare Auslegerachse des Roboterarms in dem Linearaktuator linear verfahren wird.

In Schritt a) erfolgt das Bereitstellen und Ausrichten der Robotervorrichtung an der Gebäudestruktur. Die horizontale Gebäudestruktur kann beispielsweise eine horizontale Raumdecke sein. Das Ausrichten kann beispielsweise derart erfolgen, dass die Robotervorrichtung auf einer der horizontalen Gebäudestruktur gegenüberliegenden horizontalen Gebäudestruktur, beispielsweise einem Fußboden platziert wird. Zudem kann die Robotervorrichtung in einer Orientierung ausgerichtet sein, in der ihre Plattform parallel zu der horizontalen Bewegungsbahn des Bearbeitungswerkzeugs horizontal verfahrbar ist. Das Ausrichten kann auch das Verfahren der Plattform und des Roboterarms in eine Startposition umfassen, in der das Bearbeitungswerkzeug auf einen Startbereich an der Gebäudestruktur gerichtet ist.

In Schritt b) erfolgt das Aktivieren des Bearbeitungswerkzeugs, beispielsweise durch Einschalten eines Farbspritz- oder Sandstrahlgeräts und/oder durch Fördern von Bearbeitungs- oder Beschichtungsmittel aus einem Reservoir zu dem Bearbeitungswerkzeug und Ausgabe des Bearbeitungs- oder Beschichtungsmittels an dem Bearbeitungswerkzeug, beispielsweise mittels einer Düse.

Der Schritt c) beginnt bevorzugt zugleich oder mit geringem zeitlichem Versatz zu Schritt b). In diesem Schritt werden die Hubeinheit und/oder der Roboterarm durch Steuersignale der Steuereinrichtung so angetrieben, dass die Robotereinheit mit ihren Roboterachsen eine vordefinierte Bewegungsabfolge durchführt, um das Bearbeitungswerkzeug auf einer geraden horizontalen Bewegungsbahn über die Gebäudestruktur zu führen. Mit dem aktivierten Bearbeitungswerkzeug wird hierbei eine horizontale Bearbeitungsbahn abgearbeitet. Bei der Bewegungsabfolge können insbesondere auch mehrere Achsenbewegungen gleichzeitig oder mit geringem zeitlichem Versatz und teilweise oder vollständig überlagert erfolgen. Beispielsweise kann der Roboterarm oder eine Auslegerachse über die Hubeinheit in ihrer Höhe verlagert, um einen vordefinierten Schwenkwinkel geschwenkt und linear verfahren werden, um den sich während einer geraden horizontalen Bewegungsbahn des Bearbeitungswerkzeugs kontinuierlich ändernden Abstand des Bearbeitungswerkzeugs von der Robotervorrichtung kinematisch sauber abzubilden. Beispielsweise kann zur Abarbeitung einer horizontalen Bearbeitungsbahn der Roboterarm oder die Auslegerachse von einem ersten Ende der horizontalen Bearbeitungsbahn etwa bis zu einer Mitte der Bearbeitungsbahn um eine bestimmte Hubstrecke abgesenkt, um einen bestimmten Schwenkwinkel geschwenkt und um eine bestimmte Linearstrecke in Richtung der Robotervorrichtung verfahren werden, um nach Erreichen der Mitte der horizontalen Bearbeitungsbahn bis zu einem zweiten Ende der Bearbeitungsbahn um eine bestimmte Hubstrecke angehoben, um einen zusätzlichen Schwenkwinkel in der gleichen Schwenkrichtung wie der des bestimmten Schwenkwinkels geschwenkt und um eine Linearstrecke von der Robotervorrichtung weg verfahren zu werden, die in etwa der bestimmten Linearstrecke in entgegengesetzter Verfahrrichtung entspricht. Die Vordefinition der Bewegungsabfolge kann beispielsweise über eine entsprechende Programmierung der Steuereinrichtung in Abhängigkeit von Parametern wie beispielsweise der Gebäudestrukturlänge, Oberflächenbeschaffenheit der Gebäudestruktur oder verwendetem Bearbeitungswerkzeug, z.B. entsprechend der düsenabhängigen Bearbeitungsbreite erfolgen.

Vorteilhaft ist es, wenn im Schritt c) zusätzlich die fahrbare Plattform um eine vordefinierte Verfahrstrecke verfahren wird. Hierdurch kann die Reichweite der Robotervorrichtung während des Abarbeitens einer horizontalen Bearbeitungsbahn vergrößert werden, sodass längere horizontale Bearbeitungsbahnen möglich sind als bei einer nicht während des Bearbeitens verfahrenen Plattform. Die Bewegung der fahrbaren Plattform wird hierbei mit der Kinematik der Robotereinheit synchronisiert und beispielsweise hinsichtlich der Verfahrgeschwindigkeit auf diese abgestimmt. Die Vordefinition der Verfahrstrecke kann in Abhängigkeit der Länge der zu bearbeitenden horizontalen Gebäudestruktur und der Abmessungen der Robotervorrichtung erfolgen.

Für das Verfahren zur Oberflächenbearbeitung von horizontalen Gebäudestrukturen werden grundsätzlich nur vier bis sechs Roboterachsen der Robotervorrichtung benötigt (Translation der Hubeinheit, Schwenken der Auslegerachse, Translation der Auslegerachse, Rotation des Bearbeitungswerkzeugs, wahlweise Translation der Plattform, wahlweise Rotation der Auslegerachse um sich selbst). Hierdurch wird ein sehr einfaches robotergestütztes Bearbeitungsverfahren für horizontale Gebäudestrukturen bereitgestellt. Gegenüber dem Verfahren zur Oberflächenbearbeitung von vertikalen Gebäudestrukturen wird das Bearbeitungswerkzeug derart umkonfiguriert und an dem Roboterarm angeordnet, dass es parallel zu der horizontalen Gebäudestruktur ausgerichtet ist und beispielsweise mit einer Düse auf diese zu weist.

Ganz allgemein sind im Zusammenhang mit dieser Anmeldung die Wörter "ein/eine", soweit nicht ausdrücklich anders definiert, nicht als Zahlwort zu verstehen, sondern als unbestimmte Artikel mit dem Wortsinn von "mindestens ein/eine". Merkmale mit der Angabe "genau ein/eine" können sich hingegen explizit auf "ein/eine" als Zahlwort beziehen.

Die Erfindung wird nachfolgend anhand eines Ausführungsbeispiels mit den beigefügten Zeichnungen näher erläutert. Es zeigen in schematischer Weise:
- Fig. 1 -: eine Plattform und Robotereinheit einer erfindungsgemäßen mobilen Robotervorrichtung in einer perspektivischen Ansicht;
- Fig. 2 -: eine modular aufgebaute erfindungsgemäße mobile Robotervorrichtung im zusammengebauten Zustand in einer perspektivischen Ansicht;
- Fig. 3 -: die Robotervorrichtung gemäß Fig. 2 in einer Explosionsdarstellung in einer perspektivischen Ansicht;
- Fig. 4 -: eine schematische Prinzipskizze eines erfindungsgemäßen Verfahrens zur Oberflächenbearbeitung von vertikalen Gebäudestrukturen;
- Fig. 5 -: eine schematische Prinzipskizze eines erfindungsgemäßen Verfahrens zur Oberflächenbearbeitung von horizontalen Gebäudestrukturen;
- Fig. 6 -: eine Prinzipskizze einer Ausführungsform für eine Schnittstelle zwischen Auslegerabschnitt und Bearbeitungswerkzeug zur Umsetzung von Kontaktkräften;
- Fig. 7 -: Eine Variante der Robotervorrichtung mit zusätzlichem Schwenkwinkel für den Roboterarm.

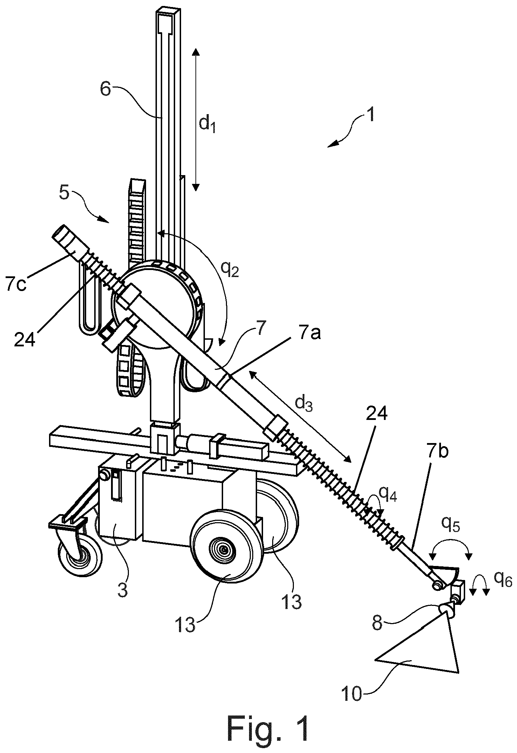

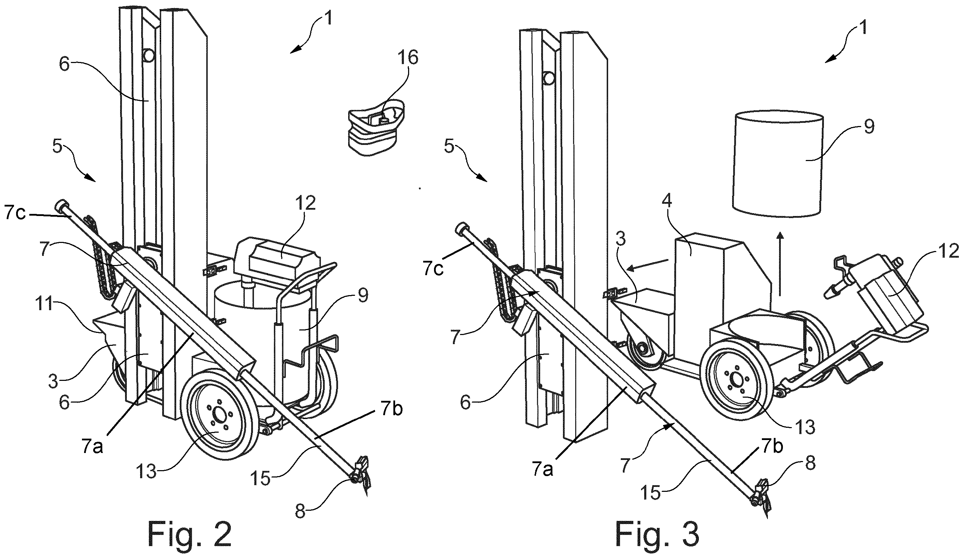

Die Figuren 1 bis 3 zeigen Ausführungsformen und Bestandteile der erfindungsgemäßen mobilen Robotervorrichtung 1 in schematischen perspektivischen Ansichten. Während Figur 1 eine vorteilhafte Anordnung der Roboterachsen der Robotervorrichtung 1 zeigt, demonstrieren die Figuren 2 und 3 überwiegend einen denkbaren modularen Aufbau der Robotervorrichtung 1.

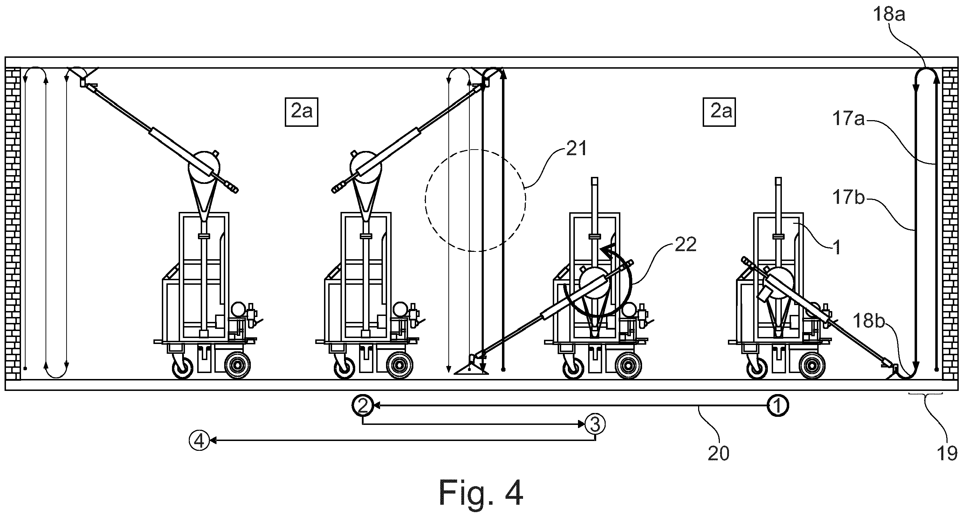

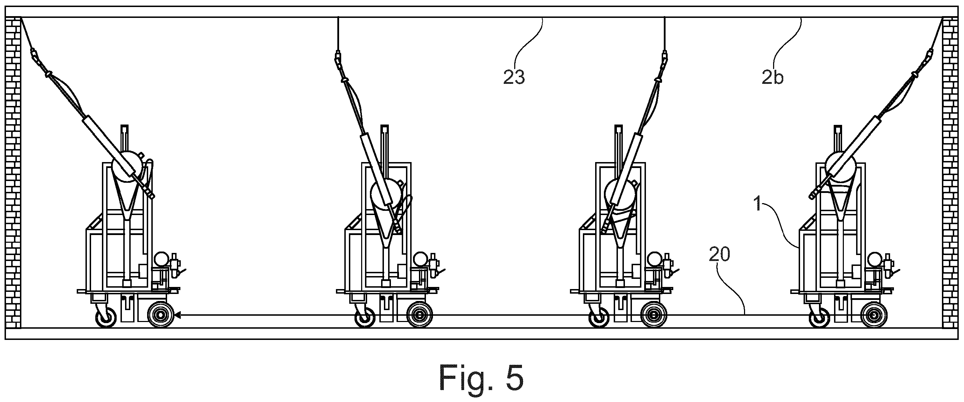

Die mobile Robotervorrichtung 1 dient der Oberflächenbearbeitung von in den Figuren 4 und 5 gezeigten Gebäudestrukturen 2a, 2b, beispielsweise von vertikalen Wandoberflächen oder horizontalen Raumdeckenflächen. Die Robotervorrichtung 1 weist eine fahrbare Plattform 3 auf, mit der die Robotervorrichtung 1 beispielsweise horizontal beispielsweise entlang einer vertikalen Gebäudestruktur 2a verfahren werden kann. Die in den Figuren gezeigte Plattform 3 weist hierzu von einem nicht dargestellten Motor angetriebene Räder 13 auf. Die Robotervorrichtung 1 hat eine Steuereinrichtung 4, mit der beispielsweise der Antrieb der Plattform 3 und eine Robotereinheit 5 der Robotervorrichtung 1 angesteuert werden können, zum Beispiel durch Abarbeitung von in der Steuereinrichtung 4 gespeicherten Programmbefehlen. Die Steuereinrichtung 4 weist eine Bedieneinheit zur Programmierung der Steuereinrichtung 4 oder zur Eingabe individueller Parameter für den Bearbeitungsvorgang auf. Zusätzlich können optional Steuerbefehle über eine signaltechnisch verbundene Fernsteuerung 16 der Robotervorrichtung 1 an die Steuereinrichtung 4 übermittelt werden.

Die Robotervorrichtung 1 hat eine Robotereinheit 5, die eine Hubeinheit 6 mit einer vertikalen Hubachse d₁ aufweist. Die Robotereinheit 5 hat zudem einen an der Hubeinheit 6 angeordneten Roboterarm 7 mit einer Roboterachse, die als linear verfahrbare Auslegerachse d₃ ausgebildet ist. Hierbei ist ein Linearaktuator 7a schwenkbar an einer ersten rotatorischen Roboterachse q₂ an der Hubeinheit 6 gelagert. Der Linearaktuator 7a kann beispielsweise als zylinderförmiger Hubaktuator mit Lineargleitlagern an seinen beiden stirnseitigen Enden oder als Linearschlitten mit Spindelantrieb und beidseits im Abstand voneinander angeordneten Lineargleitlagern ausgeführt sein. In dem Hubaktuator 7a ist die Auslegerachse d₃ linear verschiebbar angeordnet. Dabei steht ein erster Auslegerabschnitt 7b aus dem Hubaktuator 7a heraus, der sich zum Bearbeitungswerkzeug 8 erstreckt. Aus der dem Bearbeitungswerkzeug 8 diametral gegenüberliegenden Ende der Auslegerachse d₃ steht diese mit einem zweiten Auslegerabschnitt 7c aus dem Hubaktuator 7a heraus. Die Länge der aus dem Hubaktuator 7a beidseits herausstehenden ersten und zweiten Auslegerabschnitte 7b, 7c entspricht der Gesamtlänge der Auslegerachse d₃ abzüglich der Länge des Hubaktuators 7a. Durch die Linearverschiebung der Auslegerachse d₃ mit Hilfe des Hubaktuators 7a verändert sich das Verhältnis der Länge des ersten Auslegerabschnitts 7b zum zweiten Auslegerabschnitt 7c. Die Abmaße der Robotervorrichtung 1 können durch Verschiebung der Auslegerachse d₃ so reduziert werden, dass dieser durch eine Tür passt und dennoch große Flächenbereiche insbesondere mit großen Deckenhöhen erreicht. So lässt sich eine Differenz von mehr als einem Meter zwischen Türhöhe und Deckenhöhe problemlos erreichen.

Die Auslegerabschnitte 7b, 7c können jeweils mit einem Faltenbalg 24 vor Verunreinigung geschützt werden. Der Faltenbalg 24 umschließt dabei einen Abschnitt des Auslegerabschnitts 7b, 7c und kann sich durch seine Flexibilität an die sich ändernden Längen der vom Linearaktuator 7a herausragenden Auslegerabschnitte 7b, 7c anpassen.

An dem Roboterarm 7 ist am Ende der Auslegerachse d₃ ein Bearbeitungswerkzeug 8 zum Auftragen eines in diesem Beispiel als Beschichtungsmittel ausgeführten Bearbeitungsmittels 10 angeordnet, wobei das Bearbeitungswerkzeug 8 in der gezeigten Ausführungsform als Farbspritzdüse ausgeführt und mit einem Farbspritzgerät 12 fluidtechnisch verbunden ist. In dem Farbspritzgerät 12 wird in einem Reservoir 9 vorgehaltenes Beschichtungsmittel für die Düse aufbereitet und über eine einen Bestandteil des Roboterarms 7 bildende Sprühlanze 15 zu der Düse geleitet. Die Sprühlanze 15 bildet hierbei ein Zuführungssystem der Robotervorrichtung 1. Der Aufbau der Robotereinheit 5 ist mit einer Hubeinheit 6 und einer Auslegerachse d₃ deutlich reduziert gegenüber klassischen, mehrfach gegliederten Industrierobotereinheiten, wobei durch die linear verfahrbare Auslegerachse d₃ dennoch eine ausreichende Flexibilität der Robotervorrichtung 1 und eine hohe Reichweite des im Raum bewegbaren Bearbeitungswerkzeugs 8 gegeben ist. Aufgrund der linear verfahrbaren Auslegerachse d₃ können mit dem Bearbeitungswerkzeug 8 große Strecken an Gebäudestrukturen 2a, 2b abgearbeitet werden.

Die Auslegerachse d₃ ist mit einer ersten rotatorischen Roboterachse q₂ schwenkbar an der Hubeinheit 6 angeordnet. Die erste rotatorische Roboterachse q₂ ist hierbei wie gezeigt durch ein antreibbares Drehgelenk gebildet. Die Auslegerachse d₃ kann somit um eine Schwenkachse geschwenkt werden, die durch das Drehgelenk verläuft und die Hubachse d₁ schneidet. Die Auslegerachse d₃ ist überdies um ihre eigene Längsachse rotierbar und weist somit, wie in Figur 1 gezeigt, eine zweite rotatorische Roboterachse q₄ auf. Hierdurch kann das Bearbeitungswerkzeug 8 optimal in eine geforderte Orientierung, beispielsweise exakt in eine Ecke zwischen einer Zimmerwand und einer Zimmerdecke eingepasst werden.

Das Bearbeitungswerkzeug 8 ist, wie in Figur 1 gezeigt, mit einer dritten rotatorischen Roboterachse q₅ und mit einer vierten rotatorischen Roboterachse q₆ um zwei verschiedene Schwenkachsen schwenkbar, die senkrecht aufeinander stehen. Mit einer Schwenkbewegung mittels der dritten rotatorischen Roboterachse q₅ kann das Bearbeitungswerkzeug 8 konstant in einer horizontalen Ausrichtung zur Gebäudestruktur 2a, 2b gehalten werden. Mit einer Schwenkbewegung mittels der vierten rotatorischen Roboterachse q₆ kann das Bearbeitungsergebnis in Randbereichen von Gebäudestrukturen 2a, 2b, an der beispielsweise eine vertikale Gebäudestruktur 2a an eine horizontale Gebäudestruktur 2b stößt, verbessert werden.

Die Räder 13 der Plattform 3 werden so ausgerichtet, dass die Robotervorrichtung 1 parallel zu der zu bearbeitenden Wand entlanggefahren werden kann. Dann kann mit dem parallel zu der zu bearbeitenden Wand ausgerichteten Auslegerabschnitt d₃ bei gleichbleibendem Abstand zur Wand die Wandoberfläche unter Ausnutzung mindestens der Freiheitsgrade d₁, q₂, d₃ und der Bewegung der Plattform 3 und/oder der Hubeinheit 6 entlang der Wand bearbeitet werden. Dabei kann der Auslegerabschnitt d₃ auf die andere Seite umgeklappt werden, um dort die Fläche weiter zu bearbeiten. Der Auslegerabschnitt d₃ kann als Stange ausgeführt sein, der auf beiden Seiten durch ein Lineargleitlager geführt und an einem Linearschlitten fixiert ist, sodass er verfahren werden kann.

Die Robotervorrichtung 1 weist weiterhin einen nicht gezeigten Energiespeicher zur Energieversorgung der Steuereinheit 4, der Antriebe der Roboterachsen und des Antriebs der Plattform 3 auf. Die Robotervorrichtung 1 hat zudem eine in Figur 2 angedeutete, mit einem LIDAR-Sensor ausgestattete Hindernissensorik 11, die an der Plattform 3 angeordnet ist, um Hindernisse in dem Verfahrweg der Plattform 3 zuverlässig zu erkennen.

In den Figuren 2 und 3 ist gezeigt, wie eine zusammengesetzte, modular aufgebaute Robotervorrichtung 1 in mehrere Module zerlegbar ist, um einen einfacheren Transport der Robotervorrichtung 1 zu ermöglichen. So können beispielsweise das Reservoir 9, das Farbspritzgerät 12 und die Robotereinheit 5 als Untereinheiten von der Plattform 3 mit der Steuereinrichtung 4 räumlich getrennt und zu einem späteren Zeitpunkt ohne größeren Aufwand wieder zusammengesetzt werden. Ergänzend kann optional noch der Roboterarm 7 von der Hubeinheit 6 gelöst und gesondert transportiert werden. Hierdurch ist ein flexibler und insbesondere für Baustellen vorteilhafter Einsatz der Robotervorrichtung 1 möglich.

Fig. 4 zeigt eine schematische Prinzipskizze eines erfindungsgemäßen Verfahrens zur Oberflächenbearbeitung einer vertikalen Gebäudestruktur 2a, beispielsweise einer Innenraumwand. Für das Verfahren wird eine Robotervorrichtung 1 vor der Gebäudestruktur 2a platziert und so ausgerichtet, dass sie parallel zu dieser mit der Plattform 3 verfahrbar ist und das Bearbeitungswerkzeug 8 an dem Roboterarm 7 in einem geeigneten Abstand zu der Gebäudestruktur 2a positioniert und in einer Bearbeitungsrichtung auf diese zu gerichtet ist. Nach dem Aktivieren des Bearbeitungswerkzeugs 8 beispielsweise durch Einschalten eines Farbspritzgeräts 12 und Ausgabe des Bearbeitungsmittels 10 am Bearbeitungswerkzeug 8 beginnt die Robotervorrichtung 1 mit der Abarbeitung einer ersten vertikalen Bearbeitungsbahn 17a in einer Aufwärtsbewegung des Roboterarms 7. Hierzu wird in einer überlagerten Bewegung der Roboterachsen der Robotereinheit 5 die Auslegerachse d₃ mittels der Hubeinheit 6 entlang der Hubachse d₁ angehoben, um einen Schwenkwinkel über die erste rotatorische Achse q₂ nach oben in Richtung einer Raumdecke geschwenkt und linear verfahren, sodass das mit dem Roboterarm 7 geführte Bearbeitungswerkzeug 8 einer geraden vertikalen Bewegungsbahn von einem unteren, dem Fußboden zugewandten Ende zu einem oberen, der Raumdecke zugewandten Ende der vertikalen Gebäudestruktur 2a folgt. Das Abarbeiten der ersten vertikalen Bearbeitungsbahn 17a geht an dem oberen Ende der vertikalen Gebäudestruktur 2a in eine Verlagerung des Bearbeitungswerkzeugs 8 entlang einer ersten vorgegebenen Verlagerungsstrecke 18a über. Hierzu wird in einer überlagerten Bewegung der Roboterachsen der Robotereinheit 5 die Auslegerachse d₃ mittels der Hubeinheit 6 entlang der Hubachse d₁ um eine kleinere Höhe als bei der ersten vertikalen Bearbeitungsbahn 17a angehoben, um einen kleineren Schwenkwinkel als bei der ersten vertikalen Bearbeitungsbahn 17a über die erste rotatorische Achse q₂ nach oben in Richtung einer Raumdecke geschwenkt und um eine kleinere Linearstrecke als bei der ersten vertikalen Bearbeitungsbahn 17a linear verfahren, sodass das mit dem Roboterarm 7 geführte Bearbeitungswerkzeug 8 in diesem Ausführungsbeispiel einer bogenförmigen Bewegungsbahn, hier in einem von rechts nach links geführten Bogen, folgt. Während der Verlagerung ist das Bearbeitungswerkzeug 8 in diesem Ausführungsbeispiel deaktiviert. Die Verlagerung des Bearbeitungswerkzeugs 8 entlang der ersten vorgegebenen Verlagerungsstrecke 18a geht anschließend in das Abarbeiten einer zweiten vertikalen Bearbeitungsbahn 17b mit einer Abwärtsbewegung des Roboterarms 7 über. Hierzu wird in einer überlagerten Bewegung der Roboterachsen der Robotereinheit 5 die Auslegerachse d₃ mittels der Hubeinheit 6 entlang der Hubachse d₁ abgesenkt, um einen Schwenkwinkel über die erste rotatorische Achse q₂ nach unten in Richtung des Fußbodens geschwenkt und linear verfahren, sodass das mit dem Roboterarm 7 geführte Bearbeitungswerkzeug 8 einer geraden vertikalen Bewegungsbahn von einem oberen Ende zu einem unteren Ende der vertikalen Gebäudestruktur 2a folgt. Das Abarbeiten der zweiten vertikalen Bearbeitungsbahn 17b geht an dem unteren Ende der vertikalen Gebäudestruktur 2a in eine Verlagerung des Bearbeitungswerkzeugs 8 entlang einer zweiten vorgegebenen Verlagerungsstrecke 18b über. Hierzu wird in einer überlagerten Bewegung der Roboterachsen der Robotereinheit 5 die Auslegerachse d₃ mittels der Hubeinheit 6 entlang der Hubachse d₁ um eine kleinere Höhe als bei der zweiten vertikalen Bearbeitungsbahn 17b abgesenkt, um einen kleineren Schwenkwinkel als bei der zweiten vertikalen Bearbeitungsbahn 17b über die erste rotatorische Achse q₂ nach unten in Richtung des Fußbodens geschwenkt und um eine kleinere Linearstrecke als bei der zweiten vertikalen Bearbeitungsbahn 17b linear verfahren, sodass das mit dem Roboterarm 7 geführte Bearbeitungswerkzeug 8 einer bogenförmigen Bewegungsbahn, hier in einem von rechts nach links geführten Bogen, folgt. Durch die gleiche Verlagerungsrichtung der beiden Verlagerungsstrecken 18a, 18b von rechts nach links mit den dazwischenliegenden vertikalen Bearbeitungsbahnen 17a, 17b wird eine serpentinenförmige Bewegungsbahn an der vertikalen Gebäudestruktur 2a verfolgt und, aufgrund des während der Verlagerung deaktivierten Bearbeitungswerkzeugs 8, eine rechteckige bearbeitete Fläche aus zwei nebeneinander liegenden vertikalen Bearbeitungsbahnen 17a, 17b erzeugt.

Hierbei kann das Abarbeiten der zwei vertikalen Bearbeitungsbahnen 17a, 17b und das Verlagern des Bearbeitungswerkzeugs 8 entlang der Verlagerungsstrecken 18a, 18b als ein Bearbeitungszyklus 19 aufgefasst werden. Die Robotervorrichtung 1 kann zur Abarbeitung der gesamten zur Bearbeitung vorgesehenen vertikalen Gebäudestruktur 2a seriell mehrere Bearbeitungszyklen 19 hintereinander ausführen. Zwischen zwei Bearbeitungszyklen 19 wird die fahrbare Plattform 3 um eine vordefinierte Verfahrstrecke 20, die jeweils etwa der Gesamtbreite der in einem Bearbeitungszyklus 19 abgearbeiteten vertikalen Bearbeitungsbahnen 17a, 17b entspricht, horizontal verfahren, wobei vorteilhafterweise das Bearbeitungswerkzeug 8 während der Verfahrbewegung der Plattform 3 deaktiviert wird. In Figur 4 sind mit der Pfeildarstellung unterhalb der Robotervorrichtung 1 nicht jeweils einzelne, sondern mehrere sich aneinander anschließende Verfahrstrecken 20 in durchgehenden Pfeilen dargestellt.

Während des Abarbeitens der Bearbeitungsbahnen 17a, 17b wird eine dritte rotatorische Achse q₅ der Robotereinheit 5 derart angesteuert, dass das Bearbeitungswerkzeug 8 beziehungsweise beispielsweise dessen Düse stets eine horizontale Ausrichtung zu der Gebäudestruktur 2a beibehält, unabhängig von dem aktuellen Schwenkwinkel der Auslegerachse d₃. Zudem kann in den Bereichen eines oberen und unteren Endes der Gebäudestruktur 2a die Auslegerachse d₃ um ihre zweite rotatorische Achse q₄ rotiert und außerdem das Bearbeitungswerkzeug 8 um einen zusätzlichen Schwenkwinkel mittels einer vierten rotatorischen Achse q₆ der Robotereinheit 5 in Richtung einer angrenzenden Decken- oder Bodenstruktur geschwenkt werden, um saubere Beschichtungsmittelaufträge in diesen Rand- oder Eckenbereichen gewährleisten zu können.

Etwa in der horizontalen Mitte der vertikalen Gebäudestruktur 2a führt die Robotervorrichtung 1 einen Konfigurationswechsel 21 durch, bei dem die Auslegerachse d₃ um einen Konfigurationsschwenkwinkel 22 auf die andere Seite der Robotervorrichtung 1 geschwenkt wird. Hierzu ist der Konfigurationsschwenkwinkel 22 bevorzugt größer als 180°. Zudem wird die Plattform 3 um eine gewisse Verfahrstrecke (in der Pfeildarstellung von 2 nach 3) zurückverfahren, um den durch das Schwenken der Auslegerachse d₃ um den Konfigurationsschwenkwinkel 22 übersprungenen Flächenbereich der Gebäudestruktur 2a ebenfalls bearbeiten zu können. Während die Auslegerachse d₃ vor dem Konfigurationswechsel 22 im Wesentlichen in Richtung einer rechten Kante der Gebäudestruktur 2a abragt, ist sie nach dem Konfigurationswechsel 22 im Wesentlichen einer linken Kante der Gebäudestruktur 2a zugewandt. Im Prinzip läuft das Bearbeitungswerkzeug 8 vor dem Konfigurationswechsel 22 der zwischen den Bearbeitungszyklen 19 verfahrenen Robotervorrichtung 1 nach und nach dem Konfigurationswechsel 22 der Robotervorrichtung 1 vor. Durch den Konfigurationswechsel 22 kann die Robotervorrichtung 1 ohne Neuplatzierung oder Neuausrichtung die gesamte vertikale Gebäudestruktur 2a bearbeiten, selbst wenn die Gebäudestruktur 2a an beiden Seiten beispielsweise durch weitere vertikale Gebäudestrukturen begrenzt und daher die Bewegungsfreiheit der Robotervorrichtung 1 eingeschränkt ist.

Fig. 5 zeigt eine schematische Prinzipskizze eines erfindungsgemäßen Verfahrens zur Oberflächenbearbeitung einer horizontalen Gebäudestruktur 2b, beispielsweise einer Raumdecke. Für das Verfahren wird eine Robotervorrichtung 1 unter der Gebäudestruktur 2b platziert und so ausgerichtet, dass sie parallel zu dieser mit der Plattform 3 verfahrbar ist und das Bearbeitungswerkzeug 8 an dem Roboterarm 7 in einem geeigneten Abstand zu der Gebäudestruktur 2b positioniert und in einer Bearbeitungsrichtung auf diese zu gerichtet ist. Nach dem Aktivieren des Bearbeitungswerkzeugs 8 beispielsweise durch Einschalten eines Farbspritzgeräts 12 beginnt die Robotervorrichtung 1 mit der Abarbeitung einer horizontalen Bearbeitungsbahn 23. Hierzu wird in einer überlagerten Bewegung der Roboterachsen der Robotereinheit 5 die Auslegerachse d₃ mittels der Hubeinheit 6 entlang der Hubachse d₁ angehoben, um einen Schwenkwinkel über die erste rotatorische Achse q₂ von rechts nach links geschwenkt und linear verfahren, sodass das mit dem Roboterarm 7 geführte Bearbeitungswerkzeug 8 einer geraden horizontalen Bewegungsbahn entlang der horizontalen Gebäudestruktur 2b folgt.

Zugleich wird die Plattform 3 der Robotervorrichtung 1 während des gesamten Abarbeitungsvorgangs der horizontalen Bearbeitungsbahn 23 um eine Verfahrstrecke 20 verfahren, um die gesamte Strecke der horizontalen Gebäudestruktur 2b mit der Robotervorrichtung 1 in einem Abarbeitungsvorgang abarbeiten zu können. Hierbei werden die Bewegungen der Roboterachsen der Robotereinheit 5 mit der Verfahrbewegung der Plattform 3 durch die Steuereinrichtung 4 synchronisiert, um die gewünschte Bearbeitungsqualität beispielsweise durch einen gleichmäßigen und ausreichenden Bearbeitungsmittelauftrag pro Flächeneinheit zu erhalten.

Die Erfindung ermöglicht es, einfach aufgebaute und flexibel einsetzbare Robotervorrichtungen 1 und Verfahren zur Oberflächenbearbeitung von Gebäudestrukturen 2a, 2b bereitzustellen. Die überwiegend translatorisch wirkende Bewegungskinematik der Robotervorrichtung 1 unterstützt das Abarbeiten gerader Bearbeitungsbahnen 17a, 17b, 23 an den Gebäudestrukturen 2a, 2b vorteilhaft. Aufgrund ihrer kompakten Bauweise kann die Robotervorrichtung 1 auch in engen Raumbereichen wie schmalen Gebäudefluren problemlos eingesetzt werden.

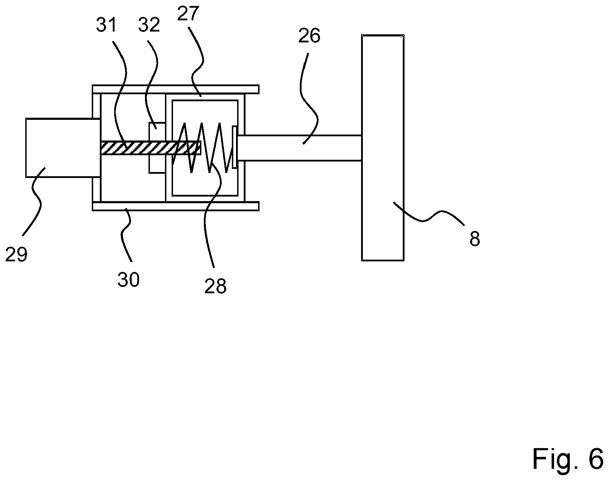

Figur 6 zeigt eine Variante einer Schnittstelle zwischen dem Auslegerabschnitt d₃ und dem Bearbeitungswerkzeug 8 für die Umsetzung von Kontaktkräften auf die zu behandelnde Oberfläche. Hierzu ist die Robotervorrichtung 1 in zwei Achsen nachgiebig gelagert und so gefedert, dass das Bearbeitungswerkzeug 8 in eine Nulllage tendiert. Das Bearbeitungswerkzeug 8 ist mit einem Bolzen 26 linear verschiebbar in einer Federbuchse 27 geführt, wobei der Bolzen 26 mit einer Druckfeder 28 vorgespannt ist. Der Abstand des Bearbeitungswerkzeugs 8 zur Wand wird mit einem Aktuator variiert. Hierzu kann der Aktuator einen Spindelmotor 29 haben, der an einer Außenbuchse 30 montiert ist. Die Außenbuchse 30 nimmt die Federbuchse auf. Der Spindelmotor 29 hat eine Spindel 31, die eine Spindelmutter 32 trägt. Die Spindelmutter 32 steht in Kontakt mit der linear in der Außenbuchse 30 geführten Federbuchse 27. Durch Verschiebung der Spindelmutter 32 lässt sich die Federbuchse 27 linear verschieben und damit der Abstand des Bearbeitungswerkzeugs 8 zur Wand einstellen.

Bei Kontaktaufgaben kann der Spindelmotor 29 die Kraft zwischen dem Bearbeitungswerkzeug 8, z. B. einer Schleifscheibe, und der Wand nicht direkt aufbringen. Vielmehr wirkt der Spindelmotor 29 auf die Druckfeder 28, welche die Andruckkraft auf die Wand ausübt. Über den Spindelmotor 29 lässt sich dann die Kontaktkraft regeln.

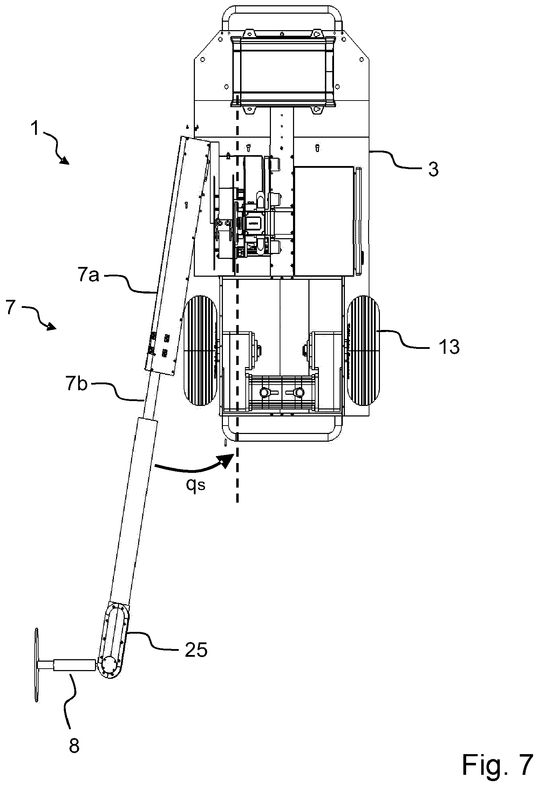

Figur 7 lässt eine Skizze einer Robotervorrichtung 1 in der Draufsicht erkennen, bei der durch Verschwenken des Auslegerabschnitts d₃ in einem Winkel q₃ ein weiterer Freiheitsgrad eingeführt wird. Damit lässt sich der Abstand des Bearbeitungswerkzeuges 8 zur Wand und die Kontaktkraft variieren, indem das Ende des Auslegerabschnitts d₃ mit dem Bearbeitungswerkzeug 8 zu der zu bearbeitenden Oberfläche der Wand hingeschwenkt oder davon weggeschwenkt wird. Damit wird ein Schwenkwinkel qₛ zwischen der Bewegungsrichtung der Plattform 3 und der Erstreckungsrichtung des Auslegerabschnitts d₃ eingestellt, der in den vorher beschriebenen Ausführungsbeispielen ohne diesen Freiheitsgrad Null beträgt. Für das Bearbeiten einer Decke, bspw. durch Schleifen, kann der Schwenkwinkel qₛ genutzt werden, um die Decke nicht nur in einer Richtung zu schleifen, sondern auch in die Fläche hineinzuarbeiten. Damit lassen sich auch kreisende Bewegungen in der Fläche realisieren.

Mit diesem zusätzlichen der Schwenkwinkel qₛ ist einerseits vorgesehen, eine Decke in zwei Dimensionen schleifen zu können, und andererseits eine Andruckkraft an der Wand zu erzeugen und den Abstand des Bearbeitungswerkzeugs einzustellen. Dies ist insbesondere sinnvoll, wenn die Andruckkraft ansonsten nur durch eine Federspannung sichergestellt wird und kein Aktor in der Schnittstelle in dem dem Bearbeitungswerkzeug 8 oder zwischen dem Auslegerabschnitt d₃ und dem Bearbeitungswerkzeug 8 zur Abstandseinstellung vorhanden ist bzw. der Verstellweg eines solchen Aktors begrenzt ist.

Der Aufbau dieser Variante ist im Übrigen mit der in den Figuren 1 bis 5 beschriebenen Ausführungsform vergleichbar, so dass die beschriebenen Merkmale dieses Ausführungsbeispiels auch auf die Ausführungsform nach Figur 7 gleichmaßen übertragbar sein können.

Mit diesem zusätzlichen der Schwenkwinkel qₛ kann auch die Bearbeitung von Wand- und Deckenflächen durch Farbauftrag, insb. mittels Sprühens, verbessert werden. Beim Schwenken einer Sprühpistole im Bodenbereich nach unten bzw. im Deckenbereich nach oben, um die Eckbereiche zu erfassen, verändert sich der Abstand zwischen Sprühdüse und Wandfläche. Dies hat zur Folge, dass die Bahn, die gesprüht wird, breiter wird. Um parallele Bahnen gleichmäßig mit Farbe besprühen zu können, kann der Abstand mit Hilfe des zusätzlichen Schwenkwinkels qₛ konstant gehalten werden.

Mit einem optionalen Differentialantrieb 25 als Schnittstelle zwischen dem Auslegerabschnitt d₃ und dem Bearbeitungswerkzeug 8 lassen sich die Rotationen der dritten rotatorische Roboterachse d4 und der vierten rotatorischen Roboterachse d5 umsetzen.

Die oben beschriebenen Varianten der Robotervorrichtung 1 können zum einfachen Transport und zur Anbringung des Roboterarms 7 modular aufgebaut sein. Hierzu kann die Linearachse mit dem Roboterarm 7 über Schnellspanner für einen einfachen Transport abnehmbar gestaltet sein. Damit ist es auch möglich, unterschiedliche Varianten als Wechselsystem je nach Anforderung an der Hubeinheit 6 zu befestigen. So können ein für den Farbauftrag mit Sprühlanze 15 spezialisierter Roboterarm 7 und ein zum Schleifen spezialisierter Roboterarm 7 in einem Set vorhanden sein, wobei je nach Bearbeitungsaufgabe der passende Roboterarm 7 montiert wird.

Die Hubeinheit 6 kann ebenfalls mit Schnellspannern abnehmbar an der Plattform 3 angebracht sein. Damit könnte die Hubeinheit auch an der Front oder dem Heck der Plattform befestigt werden, um den Auslegerabschnitts d₃ quer zur Fahrtrichtung auszurichten und nicht wie in den oben beschriebenen Varianten längs zur Fahrtrichtung.

Denkbar ist, dass andere Bearbeitungsmodule, beispielsweise zur Bodenbearbeitung, an der Plattform montiert werden. Dies kann eine horizontal liegende Linearachse sein, um z. B. Bodenbeschichtungen oder Bodenschleifarbeiten vorzunehmen.

Zur Vermessung der räumlichen Lage und Ansteuerung der Robotervorrichtung 1 können mehrere Kameras an der Robotervorrichtung 1 befestigt werden. Beispielsweise können vier Kameras vorhanden sein, die jeweils mit ihrem Blickwinkel schräg auf die zu bearbeitende Oberfläche ausgerichtet werden, d. h. dorthin wo das Bearbeitungswerkzeug wirkt. Damit lassen sich abgeklebte Bereiche erkennen. Die abgeklebten Bereiche können außen mit einer farblich auffälligen Farbe kenntlich gemacht werden, so dass in den von den Kameras 4 aufgenommenen Bildern einfache Muster, wie Vierecke, erkennbar sind, mit denen die Größe und die Position von Bereichen bestimmbar ist, die bearbeitet oder nicht bearbeitet werden müssen. Auf jeder Seite der Hubeinheit 6 können zwei Kameras vorgesehen sein, um den gesamten Bereich bis zur Deckenhöhe erfassen zu können. Dabei haben die Kameras einen Shutter (d. h. eine Verschlusseinheit), der die Objektivlinse geschlossen hält und vor Umwelteinflüssen, wie Farbnebel und Staub, schützt und nur kurzzeitig zur Bildaufnahme geöffnet wird.

Wenn die Robotervorrichtung 1 im stehenden Zustand der Plattform 3 eine Bahn hoch und herunter bearbeitet, werden nacheinander von den Kameras Bilder aufgenommen, deren Sichtfeld nicht durch den Auslegerabschnitts d₃ beeinträchtigt ist.

### Bezugszeichenliste

- 1: Robotervorrichtung
- 2a: vertikale Gebäudestruktur
- 2b: horizontale Gebäudestruktur
- 3: Plattform
- 4: Steuereinrichtung
- 5: Robotereinheit
- 6: Hubeinheit
- 7: Roboterarm
- 8: Bearbeitungswerkzeug
- 9: Reservoir
- 10: Bearbeitungsmittel
- 11: Hindernissensorik
- 12: Farbspritzgerät
- 13: Rad
- 15: Sprühlanze
- 16: Fernsteuerung
- 17a: erste vertikale Bearbeitungsbahn
- 17b: zweite vertikale Bearbeitungsbahn
- 18a: erste Verlagerungsstrecke
- 18b: zweite Verlagerungsstrecke
- 19: Bearbeitungszyklus
- 20: Verfahrstrecke
- 21: Konfigurationswechsel
- 22: Konfigurationsschwenkwinkel
- 23: horizontale Bearbeitungsbahn
- 24: Faltenbalg
- 25: Differentialantrieb
- 26: Bolzen
- 27: Federbuchse
- 28: Druckfeder
- 29: Spindelmotor
- 30: Außenbuchse
- 31: Spindel
- 32: Spindelmutter
- d₁: Hubachse
- d₃: Auslegerachse
- q₂: erste rotatorische Roboterachse
- q₄: zweite rotatorische Roboterachse
- q₅: dritte rotatorische Roboterachse
- q₅: vierte rotatorische Roboterachse

## Patentansprüche

1. Mobile Robotervorrichtung (1) zur bahnförmigen Oberflächenbearbeitung von Gebäudestrukturen (2a, 2b), mit
• einer fahrbaren Plattform (3);
• einer Steuereinrichtung (4);
• einer Robotereinheit (5), die eine Hubeinheit (6) mit einer vertikalen Hubachse (d₁) sowie einen an der Hubeinheit (6) angeordneten Roboterarm (7) mit zumindest einer Roboterachse aufweist; und
• einem an dem Roboterarm (7) angeordneten Bearbeitungswerkzeug (8) zum Bearbeiten einer Oberfläche einer monotonen Gebäudestruktur (2a, 2b);
wobei der Roboterarm (7) eine translatorische Roboterachse aufweist, die als linear verfahrbare Auslegerachse (d₃) ausgebildet ist, und die Auslegerachse (d₃) mit einer ersten rotatorischen Roboterachse (q₂) schwenkbar an der Hubeinheit (6) angeordnet ist, **dadurch gekennzeichnet, dass** das Bearbeitungswerkzeug (8) quer von der linear verfahrbaren Auslegerachse (d₃) abragt und eingerichtet ist, eine parallel zur Auslegerachse (d₃) ausgerichtete Oberfläche zu bearbeiten, und dass die linear verfahrbare Auslegerachse (d₃) des Roboterarms (7) mit einem Linearaktuator gekoppelt und durch den Linearaktuator linear verfahrbar angetrieben ist, wobei die linear verfahrbare Auslegerachse (d₃) beidseits aus dem Linearaktuator herausragt.

2. Robotervorrichtung (1) nach Anspruch 1, **dadurch gekennzeichnet, dass** die Auslegerachse (d₃) mit einer zweiten rotatorischen Roboterachse (q₄) um ihre Längsachse rotierbar ausgebildet ist.

3. Robotervorrichtung (1) nach einem der vorhergehenden Ansprüche, **dadurch gekennzeichnet, dass** das Bearbeitungswerkzeug (8) mit einer dritten rotatorischen Roboterachse (q₅) schwenkbar an der Auslegerachse (d₃) angeordnet ist.

4. Robotervorrichtung (1) nach Anspruch 3, **dadurch gekennzeichnet, dass** das Bearbeitungswerkzeug (8) mit einer dritten rotatorischen Roboterachse (q₅) und mit einer vierten rotatorischen Roboterachse (q₆) um zwei verschiedene Schwenkachsen schwenkbar ist, die senkrecht aufeinander stehen.

5. Robotervorrichtung (1) nach Anspruch 2 und 4 oder 5, **dadurch gekennzeichnet, dass** die Robotereinheit (5) genau eine Hubeinheit (6) aufweist, die über eine erste rotatorische Roboterachse (q₂) mit genau einer Auslegerachse (d₃) verbunden ist, die wiederum über eine dritte rotatorische Roboterachse (q₅) mit dem Bearbeitungswerkzeug (8) verbunden ist.

6. Robotervorrichtung (1) nach einem der vorhergehenden Ansprüche, **dadurch gekennzeichnet, dass** die Robotervorrichtung (1) modular aufgebaut ist.

7. Robotervorrichtung (1) nach einem der vorhergehenden Ansprüche, **dadurch gekennzeichnet, dass** die Robotervorrichtung (1) zu einer eine Oberflächenbeschichtung umfassenden Oberflächenbearbeitung eingerichtet ist und dass das Bearbeitungswerkzeug (8) als Auftragswerkzeug zum Auftragen eines Beschichtungsmittels ausgebildet ist.

8. Robotervorrichtung (1) nach einem der vorhergehenden Ansprüche,
**dadurch gekennzeichnet, dass** der Roboterarm (7) ein Zuführungssystem für die Zuführung eines Bearbeitungsmittels (10) zum Bearbeitungswerkzeug (8) oder eine Schnittstelle zum Anschluss eines solchen Zuführungssystems aufweist.

9. Robotervorrichtung (1) nach Anspruch 8, **dadurch gekennzeichnet, dass** das Zuführungssystem schaltbare oder bewegliche Komponenten aufweist, die von der Steuereinrichtung (4) ansteuerbar sind.

10. Robotervorrichtung (1) nach einem der vorhergehenden Ansprüche, **dadurch gekennzeichnet, dass** das Bearbeitungswerkzeug (8) ein mechanisch auf die zu bearbeitende Oberfläche wirkendes Schleifgerät ist, wobei das Bearbeitungswerkzeug (8) mit einer Druckfeder zur Ausübung einer quer von der linear verfahrbaren Auslegerachse (d₃) auf die zu bearbeitende Oberfläche wirkenden Andruckkraft mit der Auslegerachse (d₃) gekoppelt ist.

11. Robotervorrichtung (1) nach einem der vorhergehenden Ansprüche, **dadurch gekennzeichnet, dass** beidseits der Hubachse (d₁) der Hubeinheit (6) jeweils mehrere Kameras angeordnet sind, die auf unterschiedliche, sich teilweise überlappende Bereiche der zu bearbeitenden Oberfläche ausgerichtet sind, wobei die Kameras jeweils eine Linsenoptik und ein vor der Linsenoptik angeordnetes Verschlusselement zum Schutz vor Verschmutzung der Linsenoptik bei der Oberflächenbearbeitung hat, wobei die Robotervorrichtung (1) zum kurzzeitigen Öffnen eines jeweils ausgewählten Verschlusselementes für eine Bildaufnahme, zur optischen Vermessung der räumlichen Lage der Robotervorrichtung (1) in Bezug zu der zu bearbeitenden Oberfläche aus den aufgenommenen Bildern und zur Ansteuerung der Robotervorrichtung (1) mit Hilfe der aus den aufgenommenen Bildern ermittelten räumlichen Lage ausgebildet ist.

12. Robotervorrichtung (1) nach einem der vorhergehenden Ansprüche, **dadurch gekennzeichnet, dass** der Roboterarm (7) mit einem Schwenkwinkel (qₛ) seitlich von der Plattform (3) weg verschwenkbar an der Plattform (3) angeordnet ist.

13. Verfahren zur bahnförmigen Oberflächenbearbeitung von vertikalen Gebäudestrukturen (2a), mit den Schritten:
a) Bereitstellen einer Robotervorrichtung (1) gemäß einem der Ansprüche 1 bis 11 und Ausrichten der Robotervorrichtung (1) an der zu bearbeitenden vertikalen Gebäudestruktur (2a);
b) Aktivieren des Bearbeitungswerkzeugs (8);
**gekennzeichnet durch**
c) Abarbeiten einer vertikalen Bearbeitungsbahn (17a, 17b) durch Ansteuern der Robotereinheit (5) derart, dass die Hubeinheit (6) und der Roboterarm (7) eine vordefinierte Bewegungsabfolge durchführen, mit der das quer von der linear verfahrbaren Auslegerachse (d₃) des Roboterarms (7) abragende Bearbeitungswerkzeug (8) auf einer geraden vertikalen Bewegungsbahn über die parallel zur Auslegerachse (d₃) ausgerichtete Oberfläche der zu bearbeitenden Gebäudestruktur (2a) geführt wird, indem der Roboterarm (7) über die Hubeinheit (6) in der Höhe verlagert und um einen Schwenkwinkel an der Hubeinheit (6) verschwenkt wird, und die linear verfahrbare Auslegerachse (d₃) des Roboterarms (7) mit dem Linearaktuator linear verfahren wird.

14. Verfahren nach Anspruch 13, **dadurch gekennzeichnet, dass** auf den Schritt c) der folgende Schritt d) erfolgt:
d) Verlagern des Bearbeitungswerkzeugs (8) entlang einer vorgegebenen Verlagerungsstrecke (18a, 18b) von einem Ende der vertikalen Bearbeitungsbahn (17a, 17b) zu einem Anfang einer weiteren vertikalen Bearbeitungsbahn (17a, 17b) durch Ansteuern der Robotereinheit (5) derart, dass die Hubeinheit (6) und der Roboterarm (7) eine vordefinierte Bewegungsabfolge durchführen, mit der das Bearbeitungswerkzeug (8) auf der Verlagerungsstrecke (18a, 18b) über die zu bearbeitende Gebäudestruktur (2a) geführt wird,
wobei während des Verlagerns des Bearbeitungswerkzeugs (8) wahlweise das Bearbeitungswerkzeug (8) aktiviert ist oder nicht aktiviert ist.

15. Verfahren nach Anspruch 13 oder 14, **dadurch gekennzeichnet, dass** seriell mehrere Bearbeitungszyklen (19) ausgeführt werden, wobei in einem Bearbeitungszyklus (19) eine erste vertikale Bearbeitungsbahn (17a) abgearbeitet wird, anschließend eine Verlagerung des Bearbeitungswerkzeugs (8) entlang einer ersten vorgegebenen Verlagerungsstrecke (18a) durchgeführt wird, anschließend eine zweite vertikale Bearbeitungsbahn (17b) abgearbeitet wird und anschließend eine Verlagerung des Bearbeitungswerkzeugs (8) entlang einer zweiten vorgegebenen Verlagerungsstrecke (18b) durchgeführt wird.

16. Verfahren nach Anspruch 15, **dadurch gekennzeichnet, dass** zwischen zwei Bearbeitungszyklen (19) das Bearbeitungswerkzeug (8) deaktiviert und die fahrbare Plattform (3) um eine vordefinierte Verfahrstrecke (20) horizontal verfahren wird.

17. Verfahren nach Anspruch 15 oder 16, **dadurch gekennzeichnet, dass** zwischen zwei Bearbeitungszyklen (19) ein Konfigurationswechsel (21) vorgenommen wird, indem der Roboterarm (7) oder die Auslegerachse (d₃) um einen Konfigurationsschwenkwinkel (22) geschwenkt wird, und in dem zweiten der zwei Bearbeitungszyklen (19) der Roboterarm (7) eine vordefinierte Bewegungsabfolge auf einer anderen Seite der Robotervorrichtung (1) als in dem ersten der beiden Bearbeitungszyklen (19) durchführt.

18. Verfahren nach einem der Ansprüche 13 bis 17, weiterhin zur bahnförmigen Oberflächenbearbeitung von horizontalen Gebäudestrukturen (2b), mit dem Schritt:
e) Abarbeiten einer horizontalen Bearbeitungsbahn (23) durch Ansteuern der Robotereinheit (5) derart, dass das Bearbeitungswerkzeug (8) um 90° an der Auslegerachse (d₃) verschwenkt wird, so dass das Bearbeitungswerkzeug (8) von der Auslegerachse (d₃) in Richtung der vertikalen Hubachse (d₁) abragt, und dass die Hubeinheit (6) und der Roboterarm (7) eine vordefinierte Bewegungsabfolge durchführen, mit der das Bearbeitungswerkzeug (8) auf einer geraden horizontalen Bewegungsbahn über die zu bearbeitende Gebäudestruktur (2b) geführt wird, indem der Roboterarm (7) über die Hubeinheit (6) in der Höhe verlagert und um einen Schwenkwinkel an der Hubeinheit (6) verschwenkt wird, und die linear verfahrbare Auslegerachse (d3) des Roboterarms (7) mit dem Linearaktuator linear verfahren wird.

19. Verfahren nach Anspruch 18, **dadurch gekennzeichnet, dass** im Schritt e) zusätzlich die fahrbare Plattform (3) um eine vordefinierte Verfahrstrecke (20) verfahren wird.
